(19) Europäisches Patentamt
European Patent Office
Office européen des brevets

(11) EP 0 550 048 B2

(12) NEW EUROPEAN PATENT SPECIFICATION

(45) Date of publication and mention of the opposition decision:
**28.07.1999 Bulletin 1999/30**

(45) Mention of the grant of the patent:
**06.03.1996 Bulletin 1996/10**

(21) Application number: **92122071.1**

(22) Date of filing: **28.12.1992**

(51) Int. Cl.[6]: **B01J 39/08**, B01J 39/14, C01B 33/20, C11D 3/12

(54) **Inorganic ion exchange material and detergent composition**

Inorganisches Ionenaustauschmaterial und Detergenszusammensetzung

Matériau d'échange d'ions inorganique et composition détergente

(84) Designated Contracting States:
**DE ES FR GB**

(30) Priority:
**29.12.1991 JP 35926991**
**29.12.1991 JP 35927191**
**29.12.1991 JP 35927291**
**08.10.1992 JP 29784592**
**08.10.1992 JP 29784692**
**08.10.1992 JP 29784792**
**08.10.1992 JP 29784892**
**08.10.1992 JP 29784992**
**08.10.1992 JP 29785092**
**08.10.1992 JP 29785192**
**12.11.1992 JP 32841792**

(43) Date of publication of application:
**07.07.1993 Bulletin 1993/27**

(73) Proprietor: **Kao Corporation**
**Chuo-Ku Tokyo 103 (JP)**

(72) Inventors:
- **Sakaguchi, Mikio**
**Wakayama-shi, Wakayama (JP)**
- **Sakamoto, Ichiro**
**Wakayama-shi, Wakayama (JP)**
- **Kuroda, Mutsumi**
**Utsunomiya-shi, Tochigi (JP)**
- **Tsumadori, Masaki**
**Wakayama-shi, Wakayama (JP)**
- **Hasumi, Motomitsu**
**Wakayama-shi, Wakayama (JP)**
- **Sakamoto, Yuichi**
**Wakayama-shi, Wakayama (JP)**
- **Hanada, Hirohiko**
**Wakayama-shi, Wakayama (JP)**
- **Akagi, Ryuichi**
**Wakayama-shi, Wakayama (JP)**
- **Sano, Motoko**
**Wakayama-shi, Wakayama (JP)**
- **Sai, Fumio**
**Utsunomiya-shi, Tochigi (JP)**

(74) Representative:
**VOSSIUS & PARTNER**
**Postfach 86 07 67**
**81634 München (DE)**

(56) References cited:

| | |
|---|---|
| **EP-A- 0 164 514** | **EP-A- 0 164 552** |
| **EP-A- 0 488 868** | **DD-A- 227 616** |
| **DD-A- 279 243** | **FR-A- 2 434 117** |
| **GB-A- 2 226 553** | **US-A- 4 264 466** |

- **DATABASE WPIL Week 9016, Derwent Publications Ltd., London, GB; AN 90-118329**
- **DATABASE WPI Week 9050, Derwent Publications Ltd., London, GB; AN 90-373482**
- **DATABASE WPI Week 7017, Derwent Publications Ltd., London, GB; AN 70-29136R**
- **J.Cosmetics, Aerosols, Chemical and Fat Products 20, (1990), 805-808**

EP 0 550 048 B2

## Description

The present invention relates to an inorganic ion exchange material and a detergent composition containing the same, and more specifically to an inorganic ion exchange material excellent in ion exchange capacity and having anti-solubility in water, and particularly to a detergent composition containing such an inorganic ion exchange material.

To date, a large number of chelating agents, ion exchange materials, precipitants, dispersants and other substances have been reported to be used for detergent builders. In recent years, the use of tripolyphosphates has decreased, since they can cause eutrophication in closed freshwater areas such as lakes and marshes. Instead, crystalline aluminosilicates, typically those described in Japanese Patent Laid-Open Nos. 12381/1975 and 12805/1976, have been commonly used.

Although sodium silicate has an ion exchange capacity not less than that of zeolite, its use has been limited, since it is soluble in water. As means for solving this problem, a method in which sodium silicate is thermally dehydrated, baked and powdered is disclosed in Japanese Patent Laid-Open No. 239320/1985, and a method in which part of the silicon of sodium silicate is isomorphously replaced with aluminum in a similar manner is disclosed in Japanese Patent Laid-Open No. 93649/1991. However, both methods are faulty in that the obtained anti-solubility is insufficient and the ion exchange capacity is low. Also, crystalline calcium silicate alkali hydrates obtained by hydrothermal synthesis are disclosed in Japanese Patent Examined Publication No. 59245/1986, but they are substantially unsuitable for detergent builders because of their low ion exchange capacity, though they have sufficient anti-solubility in water. Moreover, because their grain shape is like coarse long fiber or mica, their aqueous dispersibility is low so that the actual ion exchange capacity shows further reduction. Also, the DD-279234A1 publication discloses a crystalline magnesium-containing silicate obtained by hydrothermal synthesis, but a problem exists wherein this silicate is too low in ion exchange capacity to practically serve as a detergent builder.

Crystalline silicates can be structurally classified by their anion form (Friedrich Liebau, "Structural Chemistry of Silicates," Springer-Verlag published in 1985). For example, the 4A type zeolite, which is a representative inorganic builder represented by the structural formula $Na_2O \cdot Al_2O_3 \cdot 2SiO_2$, is classified under the tectosilicate structure, wherein Si is partially isomorphously replaced with Al. Dimetasilicate (layered silicate), represented by the structural formula $Na_2O \cdot 2SiO_2$, is classified under the phyllosilicate structure. Also, the metasilicate represented by the structural formula $CaO \cdot MgO \cdot 2SiO_2 \cdot nH_2O$ (diopside) and the metasilicate such as sodium metasilicate represented by the structural formula $Na_2O \cdot SiO_2$ are classified under the inosilicate (polysilicate) structure.

In more detail, crystalline silicates can be classified by the number of Si-crosslinking oxygen atoms (Si-O-Si). Si-crosslinking oxygen numbers of 4, 3, 2, 1 and 0 are assigned to the $Q_4$, $Q_3$, $Q_2$, $Q_1$ and $Q_0$ units, respectively (Y. Tsunawaki, N. Iwamoto, T. Hattori and A. Mitsuishi, "J. Non-Cryst. Solids," vol. 44, p.369, 1981). With an Si-crosslinking oxygen number of 4, the tectosilicate structure is formed from the $Q_4$ unit alone. With an Si-crosslinking oxygen number of 3, the phyllosilicate structure is formed from the $Q_3$ unit alone. With an Si-crosslinking oxygen number of 2.0 to 2.5, the inosilicate structure is formed from the $Q_2$ unit alone or from the $Q_2$ and $Q_3$ units. Specifically, the silicates formed from at least the $Q_2$ unit such as those defined by the $Q_2$ unit alone and those defined by both $Q_2$ unit and $Q_3$ unit are said to have a chain structure. By contrast, the silicates consisting of the $Q_3$ unit alone are said to have a layered structure. Therefore, these silicates are clearly distinguishable from each other in their structures.

As viewed as inorganic builders for detergents, the above-mentioned silicate compounds can be described as follows: Having the tectosilicate structure formed from the $Q_4$ unit alone, the 4A type zeolite is so low in aqueous dispersibility that its amount in a detergent is limited, though it possesses a high cationic exchange capacity. Layered silicates having the phyllosilicate structure formed from the $Q_3$ unit alone, methods for whose preparation are disclosed in Japanese Patent Laid-Open Nos. 239320/1985 and 93649/1991 as described above, are excellent in aqueous dispersibility because of their hydration property, but they are undesirably highly soluble in water and their cationic exchange capacity is lower than that of the 4A type zeolite. Therefore, these types of silicates do not serve well as builders for detergents. On the other hand, with the inosilicate structure formed from the $Q_2$ unit alone or from the $Q_2$ and $Q_3$ units, diopside exhibits almost no cationic exchange capacity so that it does not serve well as an inorganic builder. Also, there is another type of inosilicate ($Na_2O \cdot SiO_2$), which has a theoretically high cationic exchange capacity, as a crystalline metasilicate, but its water solubility is extremely high so that its structure is destroyed, which results in an extreme decrease in actual cationic exchange capacity. It is, therefore, unsuitable for use as an inorganic builder.

As described above, it has been difficult to obtain an inorganic ion exchange material which is excellent in both anti-solubility in water and ion exchange capacity, and the development of such inorganic ion exchange materials having improvement in these properties has been in demand.

Accordingly, it is an object of the present invention to provide a synthesized inorganic ion exchange material and a hydrate thereof which are excellent in ion exchange capacity and have anti-solubility in water.

It is another object of the present invention to provide a detergent composition containing the above-mentioned synthesized inorganic ion exchange material.

Specifically, the present invention essentially relates to:

(1) A synthesized crystalline ion exchange material having a chain structure and comprising a composition represented by the following formula in anhydride form:

$$xM_2O \cdot ySiO_2 \cdot zM'O,$$

wherein M represents Na and/or K; M' represents Ca and/or Mg; y/x is 0.5 to 2.0; and z/x is 0.005 to 1.0, said chain structure appearing as a main scattering peak in the Raman spectra at least at 970 ± 20 $cm^{-1}$ in the range of 900 to 1200 $cm^{-1}$, or a hydrate thereof, and wherein the ratio of a peak heigh at 970 ± 20 $cm^{-1}$ to a peak heigh at 1070 ± 30 $cm^{-1}$ is 0.1 to 100, or wherein said main scattering peak in Raman spectra is present at 970 ± 20 $cm^{-1}$ alone.
(2) A detergent composition containing the synthesized crystalline ion exchange material and/or a hydrate thereof as described in (1) above, and a surfactant.

Figure 1 shows Raman spectra obtained by Raman spectrometry measurement, wherein (a) is a Raman spectrum of a synthesized inorganic ion exchange material obtained in Example 35; and (b) is that of sodium disilicate ($Na_2Si_2O_5$) obtained in Comparative Example 1.

The synthesized inorganic ion exchange material of the present invention has a composition represented by the formula in anhydride form: $xM_2O \cdot ySiO_2 \cdot zM'O$, and according to the classification by anion form, they are classified under the inosilicate structure and relate to crystalline silicate compounds formed from the $Q_2$ unit alone or from the $Q_2$ and $Q_3$ units. Said another way, the crystalline silicate has a chain structure wherein the ion exchange material contains at least a $Q_2$ unit (see Figure 1 (a)).

Specifically, the presence of the $Q_3$ and $Q_2$ units can be confirmed by Raman spectrometry. Figure 1 shows an example of Raman spectrum taken using an FT-Raman spectrophotometer (JRS-FT6500 model, produced by JEOL Ltd.; excitation light, YAG laser; wavelength, 1064 nm; detector, InGaAs). A synthesized inorganic ion exchange material of the present invention (Example 35), which is a crystalline inosilicate compound exhibiting in Figure 1 (a) a scattering peak pattern clearly different from that of a layered silicate (Comparative Example 1) having the phyllosilicate structure shown in Figure 1 (b), wherein the characteristic main scattering peak for the ion exchange material of the present invention appears at least at 970 ± 20 $cm^{-1}$, which is assigned to the $Q_2$ unit. Here, a main scattering peak pattern means a peak substantially, clearly defined in the Raman scattering spectrometry in the range of 900 to 1200 $cm^{-1}$. On the other hand, the peak assigned to the $Q_3$ unit is observed at 1070 ± 30 $cm^{-1}$. Since the silicate compounds used for the ion exchange materials of the present invention comprises $Q_2$ unit alone or $Q_2$ and $Q_3$ units, in Raman scattering spectra in the range of 900 to 1200 $cm^{-1}$, they have the characteristic main scattering peak alone at 970 ± 20 $cm^{-1}$ or two peaks at 970 ± 20 $cm^{-1}$ and 1070 ± 30 $cm^{-1}$. Also, since it is crystalline, peaks assigned to $Q_0$ and $Q_1$, units do not substantially exist. When it contains $Q_0$ and $Q_1$ units, the cationic exchange capacity is very low. When the compound consists of a $Q_2$ unit and a $Q_3$ unit, as shown in Raman scattering spectra obtained by Raman spectrometry measurements described in Examples 1 to 38, the ratio of the scattering peak assigned to the $Q_2$ unit to the scattering peak assigned to the $Q_3$ unit is 0.1 to 100. Here, the peak ratio is calculated as the ratio of the peak height at 970 ± 20 $cm^{-1}$ to the peak height at 1070 ± 30 $cm^{-1}$.

Also from the measurements of cationic exchange capacity and the amount of Si dissolved, it is evident that the structural stability in water of the synthesized inorganic ion exchange material of the present invention is high, despite the $Q_2$ unit structure, owing to the containment of an appropriate amount of Ca and/or Mg ions in the silica network.

The synthesized inorganic ion exchange material of the present invention has a composition represented by the formula $xM_2O \cdot ySiO_2 \cdot zM'O$, wherein M represents Na and/or K, and although any one is acceptable with no limitations, a preference is given to the case of using both Na and K, from the viewpoint of the cationic exchange capacity. In this case, the preferred molar ratio of K/Na is 0.01 to 10.0.

M' represents Ca and/or Mg, although any one is acceptable with no limitations. In the case of both Ca and Mg, the preferred molar ratio of Mg/Ca is 0.01 to 10.0.

With respect to this formula, y/x is 0.5 to 2.0, preferably 1.0 to 1.8. When y/x is less than 0.5, the obtained composition has insufficient anti-solubility in water, and when y/x exceeds 2.0, the obtained composition has a low ion exchange capacity, making it insufficient to be used for an inorganic ion exchange material. With respect to z/x, it is 0.005 to 1.0, preferably 0.01 to 0.9, and more preferably 0.01 to 0.58. When z/x is less than 0.005, the obtained composition has insufficient anti-solubility, and when z/x exceeds 1.0, the obtained composition has a low ion exchange capacity, making it insufficient to be used for an inorganic ion exchange material. With respect to x, y and z, there are no limitations, provided that y/x and z/x have the above relationships. When $xM_2O$, for example, is $x'Na_2O \cdot x''K_2O$ as described above, x equals to x' + x''. Likewise, when zM'O, for example, is $z'CaO \cdot z''MgO$, z equals to z' + z''.

The inorganic ion exchange material of the present invention may be a hydrate, wherein the amount of hydration is normally 0 to 20, when calculated as the molar amount of $H_2O$.

The inorganic ion exchange material of the present invention is obtained by chemical synthesis, which com-

prises three components, $M_2O$, $SiO_2$ and M'O, as indicated by the formula thereof. Materials which can be converted as each of these components, therefore, are indispensable as starting materials for producing the inorganic ion exchange material of the present invention. In the present invention, known compounds can be appropriately used as starting materials without limitations. Examples of the $M_2O$ component and the M'O component include simple or complex oxides, hydroxides and salts of respective elements; and minerals containing respective elements. Specifically, examples of the starting materials for the $M_2O$ component include NaOH, KOH, $Na_2CO_3$, $K_2CO_3$ and $Na_2SO_4$. Examples of the starting materials for the M'O component include $CaCO_3$, $Ca(OH)_2$, $MgCO_3$, $Mg(OH)_2$, MgO and dolomite. Examples of the starting materials for the $SiO_2$ component include silica, silica sand, cristobalite, kaolin, talc, fused silica and sodium silicate.

In the present invention, a method of producing the synthesized inorganic ion exchange material may be exemplified by mixing these starting material components in a given amount ratio for the x, y and z values of the desired inorganic ion exchange material, and baking the resulting mixture in a temperature range of normally from 300 to 1300°C, preferably from 500 to 1000°C, more preferably from 600 to 900°C, and crystallizing it. Alternative methods may also be exemplified by mixing in the same manner as above, melting the mixture at a temperature of 1100 to 1600°C to yield a glassified product, followed by baking, or melting to produce a water glass and baking it. In this case, when the heating temperature is less than 300°C, the crystallization is insufficient, thereby making the anti-solubility of the resulting inorganic ion exchange material poor, and when it exceeds 1300°C, coarse grains and non-crystalline phases are likely to be formed, thereby decreasing the ion exchange capacity of the resulting inorganic ion exchange material. The heating time is normally 0.1 to 24 hours. Such baking can normally be carried out in a heating furnace such as an electric furnace or a gas furnace. The baked product may be milled as necessary to a given granularity. This milling is achieved using a ball mill, a roller mill or another mechanical mill.

The synthesized inorganic ion exchange material of the present invention having the structural characteristics as described above can be obtained by these processes.

The hydrate of the inorganic ion exchange material of the present invention can easily be prepared by a known method without limitations. For example, a hydride of an inorganic ion exchange material can be obtained by suspending the anhydride of the above inorganic ion exchange material in ion exchanged water to form a hydrate and dried to yield a powder.

The inorganic ion exchange material of the present invention or the hydrate thereof thus obtained has an ion exchange capacity of not less than 100 mg $CaCO_3$/g, preferably 200 to 600 mg $CaCO_3$/g. The term "ion exchange capacity" used herein is a value obtained by the measurement method described below in the Examples, with exception that when the ion exchange capacity is not less than 500 mg $CaCO_3$/g, the amount of the calcium chloride solution is changed from 100 ml to 200 ml.

In the present invention, the term "anti-solubility" or "anti-solubility in water" relates to the stability in water of the inorganic ion exchange material.

Accordingly, when the anti-solubility is insufficient, the stability in water is poor, leading to an increase in the amount of Si dissolved in water. By contrast, the term "anti-solubility is excellent" means that the stability in water of the inorganic ion exchange material is good, leading to a remarkable lowering in the amount of Si dissolved in water.

In the present invention, the amount of Si dissolved in water is normally not more than 120 mg/g, when calculated as $SiO_2$, preferably not more than 90 mg/g, more preferably not more than 60 mg/g, which can be said to be substantially insoluble in water. Here, the term "substantially insoluble in water" means stability in water of the chemical structure concerned with the cationic exchange capacity, so that the amount of Si dissolved, when calculated as $SiO_2$, is normally not more than 100 mg/g when a 2 g sample is added to 100 g of ion exchanged water and the mixture is stirred at 25°C for 30 minutes.

Since the inorganic ion exchange material of the present invention possesses excellent ion capturing capacity and stability in water, the detergent composition of the present invention containing this inorganic ion exchange material possesses excellent washing performance.

The detergent composition of the present invention contains at least the above-mentioned inorganic ion exchange material and/or the hydrate thereof, and a surfactant.

The amount of the above-mentioned inorganic ion exchange material and/or the hydrate thereof is normally 0.5 to 70% by weight, preferably 2 to 60% by weight in the whole composition. When the amount is lower than 0.5% by weight, sufficient effects of the inorganic ion exchange material cannot be achieved in the composition. When it exceeds 70% by weight, the amounts of the other components contained in the detergent are restricted, thereby making the balance of the components poor as a detergent.

The surfactant used in the present invention is not limitative to particular ones as long as they are those generally used for detergents. Specifically, they may be one or more surfactant selected from the group consisting of anionic surfactants, nonionic surfactants, cationic surfactants and ampholytic surfactants as exemplified below. For instance, the surfactants can be chosen such that the surfactants of the same kind are chosen, as in the case where a plurality of the cationic surfactants are chosen. Alternatively, the surfactants of the different kinds are chosen, as in the

case where the cationic surfactant and the nonionic surfactant are respectively chosen.

The anionic surfactants used for the detergent composition are exemplified as follows:

(1) Linear or branched alkylbenzenesulfonates having alkyl groups with an average carbon number of 10 to 16.

(2) Alkyl or alkenyl ether sulfates having linear or branched alkyl groups or alkenyl groups with an average carbon number of 10 to 20 and having 0.5 to 8 mol on an average of ethylene oxide, propylene oxide, butylene oxide, ethylene oxide/propylene oxide in a ratio of 0.1/9.9 to 9.9/0.1, or ethylene oxide/butylene oxide in a ratio of 0.1/9.9 to 9.9/0.1 added in one molecule.

(3) Alkyl or alkenyl sulfates having alkyl groups or alkenyl groups with an average carbon number 10 to 20.

(4) Olefinsulfonates having on an average of 10 to 20 carbon atoms in one molecule.

(5) Alkanesulfonates having on an average of 10 to 20 carbon atoms in one molecule.

(6) Saturated or unsaturated fatty acid salts having on an average of 10 to 24 carbon atoms in one molecule.

(7) Alkyl or alkenyl ether carbonates having alkyl groups or alkenyl groups with an average carbon number of 10 to 20 and having 0.5 to 8 mol on an average of ethylene oxide, propylene oxide, butylene oxide, ethylene oxide/propylene oxide in a ratio of 0.1/9.9 to 9.9/0.1, or ethylene oxide/butylene oxide in a ratio of 0.1/9.9 to 9.9/0.1 added in one molecule.

(8) $\alpha$-sulfofatty acid salts or $\alpha$-sulfofatty acid esters represented by the following formula:

$$R\text{-}\underset{\displaystyle SO_3Z}{\underset{|}{C}}HCO_2Y$$

wherein Y represents an alkyl group of carbon number 1 to 3 or a counter ion; Z represents a counter ion; and R represents an alkyl group or alkenyl group of carbon number 10 to 20.

Examples of the counter ions of the anionic surfactants used herein include alkali metal ions such as sodium and potassium; alkaline earth metal ions such as calcium and magnesium; ammonium ion; and alkanolamines (e.g., monoethanolamine, diethanolamine, triethanolamine, and triisopropanolamine) having 1 to 3 alkanol groups of carbon number 2 or 3.

(9) Amino acid-type surfactants represented by the following formulas:

No. 1

$$R_1 - CO - \underset{\displaystyle R_2}{\underset{|}{N}} - \underset{\displaystyle R_3}{\underset{|}{CH}} - COOX$$

wherein $R_1$ represents an alkyl group or alkenyl group of carbon number 8 to 24; $R_2$ represents a hydrogen atom or an alkyl group of carbon number 1 to 2; $R_3$ represents an amino acid residue; and X represents an alkali metal ion or alkaline earth metal ion;

No. 2

$$R_1 - CO - \underset{\displaystyle R_2}{\underset{|}{N}} - (CH_2)_n - COOX$$

wherein $R_1$, $R_2$ and X are as defined above; and n represents an integer of 1 to 5;

No. 3

$$\begin{matrix} R_1 \\ \\ R_1 \end{matrix} > N - (CH_2)_m - COOX$$

wherein $R_1$ and X are as defined above; and m represents an integer of 1 to 8;

No. 4 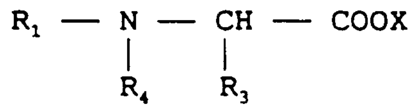

wherein $R_1$, $R_3$ and X are as defined above; and $R_4$ represents a hydrogen atom or an alkyl group or hydroxyalkyl group of carbon number 1 to 2;

No. 5 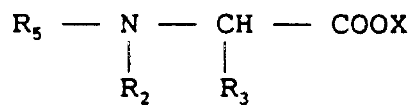

wherein $R_2$, $R_3$ and X are as defined above; and $R_5$ represents a β-hydroxyalkyl group or β-hydroxyalkenyl group of carbon number 6 to 28; and

No. 6 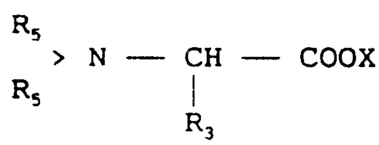

wherein $R_3$, $R_5$ and X are as defined above.

(10) Phosphate ester surfactants:

No. 1 Alkyl (or alkenyl) acid phosphates represented by the following formula:

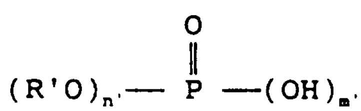

wherein R' represents an alkyl group or alkenyl group of carbon number 8 to 24; and n'+m'=3 , and n' = 1 to 2;

No. 2 Alkyl (or alkenyl) phosphates represented by the following formula:

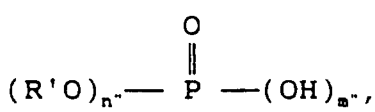

wherein R' is as defined above; and n"+m"=3 , and n" = 1 to 3; and

No. 3 Alkyl (or alkenyl) phosphates represented by the following formula:

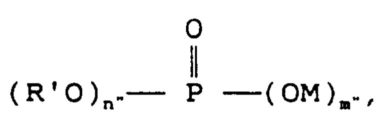

wherein R', n" and m" are as defined above; and M represents Na, K or Ca.

The nonionic surfactants used for the detergent composition are exemplified as follows:

(11) Polyoxyethylene alkyl (or alkenyl) ethers having alkyl groups or alkenyl groups with an average carbon number 10 to 20 and having 1 to 20 mol of ethylene oxide added.

(12) Polyoxyethylene alkyl phenyl ethers having alkyl groups with an average carbon number 6 to 12 and having 1 to 20 mol of ethylene oxide added.

(13) Polyoxypropylene alkyl (or alkenyl) ethers having alkyl groups or alkenyl groups with an average carbon number 10 to 20 and having 1 to 20 mol of propylene oxide added.

(14) Polyoxybutylene alkyl (or alkenyl) ethers having alkyl groups or alkenyl groups with an average carbon number 10 to 20 and having 1 to 20 mol of butylene oxide added.

(15) Nonionic surfactants having alkyl groups or alkenyl groups with an average carbon number 10 to 20 and having 1 to 30 mol in total of ethylene oxide and propylene oxide or ethylene oxide and butylene oxide added, the molar ratio of ethylene oxide to propylene oxide or butylene oxide being 0.1/9.9 to 9.9/0.1.

(16) Higher fatty acid alkanolamides or alkylene oxide adducts thereof represented by the formula:

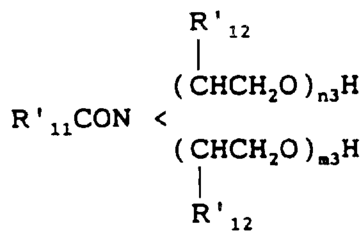

wherein $R'_{11}$ is an alkyl group or alkenyl group of carbon number 10 to 20; $R'_{12}$ is an H atom or $CH_3$ group; n3 is an integer of 1 to 3; and m3 is an integer of 0 to 3.

(17) Sugar fatty acid esters composed of sugar and fatty acid with an average carbon number 10 to 20.

(18) Fatty acid glycerine monoesters composed of glycerine and fatty acid with an average carbon number 10 to 20.

(19) Alkylamine oxides represented by the formula:

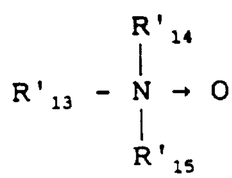

wherein $R'_{13}$ is an alkyl group or alkenyl group of carbon number 10 to 20; and $R'_{14}$ and $R'_{15}$ are independently alkyl groups of carbon number 1 to 3.

Among these nonionic surfactants, a preference is given to the polyoxyethylene alkyl ethers having alkyl groups with an average carbon number 10 to 15 and having 5 to 15 mol of ethylene oxide added, particularly to the polyoxyethylene alkyl ethers having alkyl groups with an average carbon number 12 to 14 and having 6 to 10 mol of ethylene oxide added.

The cationic surfactants used for the detergent composition are exemplified as follows:

(20) Cationic surfactants represented by the following formulas:

No. 1

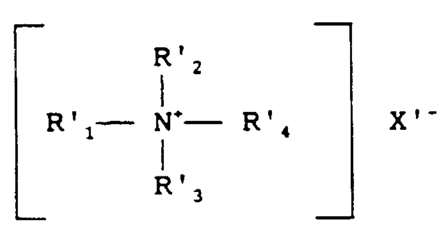

wherein at least one of $R'_1$, $R'_2$, $R'_3$ and $R'_4$ represents an alkyl group or alkenyl group of carbon number 8 to 24 and the others represent an alkyl group of carbon number 1 to 5; and X' represents a halogen;

No. 2

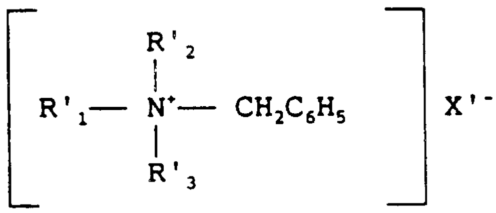

wherein $R'_1$, $R'_2$, $R'_3$ and X' are as defined above; and

No. 3

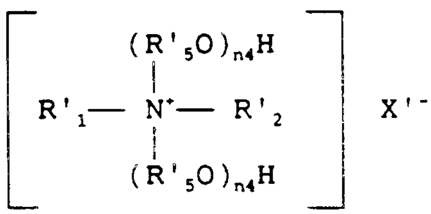

wherein $R'_1$, $R'_2$ and X' are as defined above; $R'_5$ represents an alkylene group of carbon number 2 to 3; and n4 is an integer of 1 to 20.

(21) Alkylamines or alkenylamines represented by the following formula:

$$R''_1R''_2NH \qquad \text{No. 1}$$

wherein $R''_1$ represents an alkyl group or alkenyl group of carbon number 12 to 26; $R''_2$ represents an alkyl group of carbon number 1 to 7, or an alkyl group or alkenyl group of carbon number 12 to 26;

No. 2

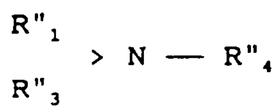

wherein $R''_1$ and $R''_3$, which may be the same or different, respectively represent alkyl groups of carbon number 12 to 22; $R''_4$ represents methyl group, ethyl group, or $-(R''_5O)_{n5}H$ group, wherein $R''_5$ represents an alkylene group of carbon number 2 to 3; and n5 is an integer of 1 to 20.

The ampholytic surfactants used for the detergent composition are exemplified as follows:

(22) Sulfonate-type ampholytic surfactants represented by the following formulas:

No. 1

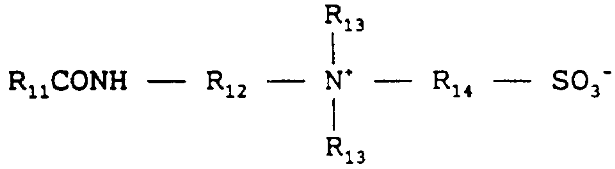

wherein $R_{11}$ represents an alkyl group or alkenyl group of carbon number 8 to 24; $R_{12}$ represents an alkylene group of carbon number 1 to 4; $R_{13}$ represents an alkyl group of carbon number 1 to 5; and $R_{14}$ represents an alkylene group or hydroxyalkylene group of carbon number 1 to 4;

No. 2

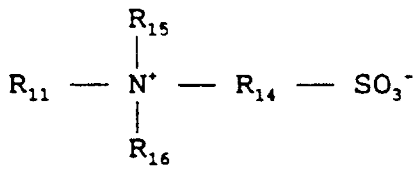

wherein $R_{11}$ and $R_{14}$ are as defined above; $R_{15}$ and $R_{16}$, which may be the same or different, independently represent an alkyl group of carbon number 8 to 24 or an alkenyl group of carbon number 1 to 5; and

No. 3

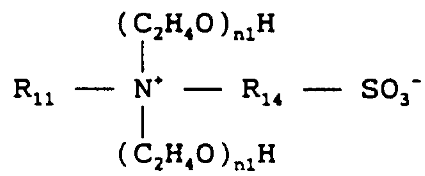

wherein $R_{11}$ and $R_{14}$ are as defined above; and n1 represents an integer of 1 to 20.

(23) Betaine-type ampholytic surfactants represented by the following formulas:

No. 1

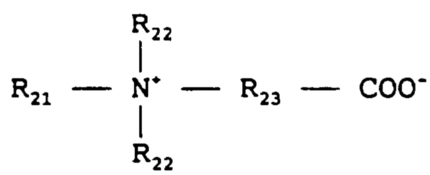

wherein $R_{21}$ represents an alkyl group, alkenyl group, β-hydroxyalkyl group, or β-hydroxyalkenyl group of carbon number 8 to 24; $R_{22}$ represents an alkyl group of carbon number 1 to 4; and $R_{23}$ represents an alkylene group or a hydroxyalkylene group of carbon number 1 to 6;

No. 2

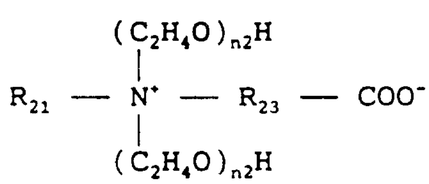

wherein $R_{21}$ and $R_{23}$ are as defined above; and n2 represents an integer of 1 to 20; and

No. 3

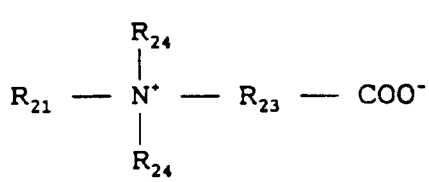

wherein $R_{21}$ and $R_{23}$ are as defined above; and $R_{24}$ represents a carboxyalkyl group or hydroxyalkyl group of carbon number 2 to 5.

Among the above surfactants, preferences are given to surfactant nos. (1), (2), (3), (4), (5), (6), (11), (12), (13),

(15), (16), No. 2 of (22), and No. 1 of (23).

Particularly, those containing surfactant nos. (1), (2), (3) or (11) as the main surfactant are preferred.

Also, the anionic surfactants and the nonionic surfactants are particularly preferred to be used as the main surfactant from the viewpoint of concentration of the detergent composition.

The amount of the above surfactants is preferably 1 to 60% by weight, more preferably 5 to 50% by weight based on the whole composition. When the amount is less than 1% by weight, the resulting composition fails to show its inherent properties as a detergent, and when it exceeds 60% by weight, the amounts of other components in the detergent composition are restricted, failing to have a good balance of components as a detergent.

As described above, the detergent composition of the present invention contains the inorganic ion exchange material and/or the hydrate thereof, and the surfactants. Besides them, the detergent composition of the present invention may further contain other components, depending upon various purposes.

Accordingly, the present invention will be described in detail below by means of the first to the fourth embodiments of the detergent compositions containing various additives as described below.

(1) First embodiment:

Conventionally, in washing at homes, for example, a problem has been pointed out that mud dirt once removed from a washing item during washing sticks back to the washing item, thereby re-contaminating the washing item.

In the first embodiment, such a problem is eliminated by providing a detergent composition suitable for concentration and excellent in washing power for mud stains.

In the first embodiment of the present invention, the detergent composition comprises:

(a) a surfactant;
(b) the inorganic ion exchange material as described above and/or a hydrate thereof; and
(c) a polymer or a copolymer having a repeating unit represented by the following formula:

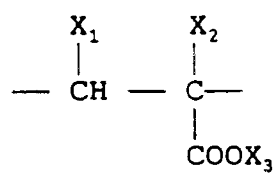

wherein $X_1$ represents methyl group, a hydrogen atom or $COOX_3$ group; $X_2$ represents methyl group, a hydrogen atom or a hydroxyl group; and $X_3$ represents a hydrogen atom, an alkali metal element, an alkaline earth metal element, $NH_4$ group or ethanolamine group.

The surfactant (a) and the above inorganic ion exchange material and/or the hydrate thereof (b) in the first embodiment are as described above.

The polymer or copolymer used for the present invention contains the repeat unit represented by the following formula:

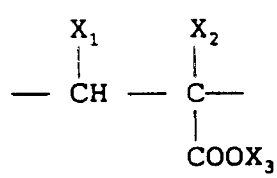

wherein $X_1$ represents methyl group, a hydrogen atom or $COOX_3$ group; $X_2$ represents methyl group, a hydrogen atom or a hydroxyl group; and $X_3$ represents a hydrogen atom, an alkali metal element, an alkaline earth metal element, $NH_4$ group or ethanolamine group.

With respect to the above formula, the alkali metals are exemplified by Na, K and Li, and the alkaline earth metals are exemplified by Ca and Mg.

The polymer or copolymer used for the present invention is synthesized by a polymerisation reaction of, for

example, acrylic acid, (anhydrous) maleic acid, methacrylic acid, α-hydroxyacrylic acid, crotonic acid, isocrotonic acid, or a salt thereof; or a copolymerization reaction of each monomer; or a copolymerization reaction with other polymerizable monomers. Examples of the other polymerizable monomers used in this copolymerization include aconitic acid, itaconic acid, citraconic acid, fumaric acid, vinylphosphonic acid, sulfonated maleic acid, diisobutylene, styrene, methyl vinyl ether, ethylene, propylene, isobutylene, pentene, butadiene, isoprene, vinyl acetate (and vinyl alcohol in the case of hydrolysis following copolymerization) and acrylates. These examples are not to be construed as limitative.

The polymerization reaction can be achieved by known ordinary methods without limitations.

In the present invention, the polymer or copolymer described above has a weight-average molecular weight of 800 to 1,000,000, preferably 5,000 to 200,000. When the weight-average molecular weight is less than 800, the effects of the present invention attributable to the polymer cannot be obtained. When it exceeds 1,000,000, the re-contamination takes place due to the influence of the polymer, thereby hampering the washing performance.

Although the copolymerization ratio of the repeating unit of the above formula and the other copolymerizable monomer is not subject to limitation, the copolymerization ratio of [the repeating unit of the above formula]/[the other copolymerizable monomer] is preferably in the range of from 1/100 to 90/10.

In the present invention, the polymer or copolymer described above is present in an amount of 0.2 to 8% by weight, preferably 1 to 6% by weight based on the whole composition. When the amount is less than 0.2% by weight, the desired effects of the present invention cannot be obtained. When it exceeds 8% by weight, further addition of the polymer or copolymer to the composition show no significant effects, but merely increases the costs thereof.

(2) Second embodiment:

Conventionally, for difficult-to-remove dirt containing skin fat and other fatty acids, lipids and other substances, the addition of a silicate for the purpose of increasing their washing power can reduce their solubility with time in long-term storage in systems containing a large amount of zeolite such as concentrated, highly densified detergents. Thus, there has long been a demand for overcoming this drawback by improving washing performance.

In the second embodiment, such a problem is eliminated by providing a detergent composition excellent in solubility at the time of use and having improved washing power for dirt caused by fatty acids.

In the second embodiment of the present invention, the nonionic powdery detergent composition comprises:

(a) 12 to 50% by weight of a nonionic surfactant;
(b) 0.5 to 70% by weight of the inorganic ion exchange material as described above and/or a hydrate thereof; and
(c) 5 to 30% by weight of a porous oil-absorbing carrier having an oil-absorbing capacity of not less than 80 ml/100 g.

The nonionic surfactant (a) and the above inorganic ion exchange material and/or the hydrate thereof (b) in the second embodiment are as described above. The nonionic surfactant (a) is preferably used in an amount of 12 to 35% by weight.

The porous oil-absorbing carrier used in the present invention (hereinafter, it may simply be referred to as "oil-absorbing carrier") has an oil-absorbing capacity of normally not less than 80 ml/100 g, preferably not less than 150 ml/100 g, more preferably not less than 200 ml/100 g. Here, the oil-absorbing capacity is measured according to JIS K6220.

The above porous oil-absorbing carriers may preferably be silica derivatives containing silicon, when calculated as $SiO_2$ in an anhydrous state, in an amount of not less than 30% by weight, preferably not less than 40% by weight. Examples of such porous oil-absorbing carriers include amorphous silica, clayey substances and amorphous aluminosilicates. Specifically, examples of amorphous silica derivatives having an average particle diameter of not more than 200 μm include oil-absorbing carriers commercially available under the tradenames of Tokusil (manufactured by Tokuyama Soda Co., Ltd.), Nipsil (manufactured by Nippon Silica Industries) and Tixolex (Kofran Chemical).

Among these silica derivatives, when porous oil-absorbing carriers giving a water dispersion with a pH of not less than 9 are used, the solubility which becomes poor in high humidity storage can be further improved. Therefore, the oil-absorbing carriers containing silicon in an amount of not less than 30% by weight, when calculated as $SiO_2$, and giving a water dispersion with a pH of not less than 9 may be preferably used. Among these porous oil-absorbing carriers, examples of the amorphous silicas include Tokusil AL-1 (manufactured by Tokuyama Soda Co., Ltd.), Nipsil NA (manufactured by Nippon Silica Industries), Carplex #100 (manufactured by Shionogi Pharmacy), Sipernart D10 (Degussa AG), etc. The porous oil-absorbing carriers satisfying the above-described requirements are also found in the clayey substances, and examples thereof include sodium mordenite HSZ-640 NAA (manufactured by Tosoh Corporation), etc. Examples of the amorphous aluminosilicates include commercially available oil-absorbing carriers under the tradename of Tixolex 25 (Kofran Chemical).

In general, the porous oil-absorbing carriers illustrated above have scarcely any cationic exchange capacity.

Therefore, the oil-absorbing carriers having good cationic exchanging are advantageous, since they also act as a builder for the detergent. Examples of the oil-absorbing carriers having a high oil-absorbency and a high cationic exchange capacity include oil-absorbing amorphous aluminosilicates represented by the following formula:

$$a(Ma_2O) \cdot Al_2O_3 \cdot b(SiO_2) \cdot c(H_2O)$$

wherein Ma represents an alkali metal atom; and a, b and c each represent the molar number of the respective components, which are usually as follows: $0.7 \leqq a \leqq 2.0$, $0.8 \leqq b \leqq 4$, and c is an arbitrary positive number.

Particularly preferred are those represented by the following formula:

$$Na_2O \cdot Al_2O_3 \cdot d(SiO_2) \cdot e(H_2O)$$

wherein d represents a number of 1.8 to 3.2 and e represents a number of 1 to 6.

The amorphous aluminosilicates having a high oil absorbency and a high ion exchange capacity usable in the present invention are prepared by adding an aqueous solution of a low-alkali alkali metal aluminate having a molar ratio of $Ma_2O$ to $Al_2O_3$ (Ma being an alkali metal) of $Ma_2O/Al_2O_3$=1.0 to 2.0 and a molar ratio of $H_2O$ to $Ma_2O$ of $H_2O/Ma_2O$=6.0 to 500 to an aqueous solution of an alkali metal silicate having a molar ratio of $SiO_2$ to $Ma_2O$ of $SiO_2/Ma_2O$=1.0 to 4.0 and a molar ratio of $H_2O$ to $Ma_2O$ of $H_2O/Ma_2O$=12 to 200 under vigorous stirring at 15 to 60°C, preferably 30 to 50°C. The intended product can be advantageously obtained by heat-treating a white slurry of precipitates thus formed at 70 to 100°C, preferably 90 to 100°C, for 10 minutes to 10 hours, preferably not more than 5 hours, followed by filtration, washing and drying. Incidentally, the aqueous solution of an alkali metal silicate may be added to the aqueous solution of a low-alkali alkali metal aluminate.

By this method, the oil-absorbing amorphous aluminosilicate carrier having an ion exchange capacity of not less than 100 $CaCO_3$ mg/g and an oil-absorbing capacity of not less than 200 ml/100 g can be easily obtained (refer to Japanese Patent Laid-Open Nos. 191417/1987 and 191419/1987).

The pH of the dispersion of the oil-absorbing carrier is determined according to JIS K 6220. In particular, about 5 g of the sample is weighed into a hard Erlenmeyer flask and 100 ml of water free from carbon diode is added thereto. The flask is stoppered and shaken for 5 minutes. The liquid thus obtained is used as a test solution to determine the pH by a glass electrode method (JIS Z 8802-7.2.3).

By selecting an oil-absorbing carrier which gives a water dispersion with a pH of not less than 9.0, a nonionic powdery detergent composition with a solubility which does not deteriorate during storage under high humidity conditions can be obtained.

When the detergent composition has a quite high alkalinity or the storage conditions are quite severe, it is preferable to select an oil-absorbing carrier which satisfies the severer condition such that the soluble amount in a 2% aqueous NaOH solution is not more than 0.5 g. Specifically, it is desired that the porous oil-absorbing carrier contains silicon in an amount of not less than 30% by weight, when calculated as $SiO_2$, and that the soluble amount in the 2% aqueous NaOH solution is not more than 0.5 g.

More specifically, it is preferable to select such an oil-absorbing carrier that when 10 g of the oil-absorbing carrier is dispersed in 100 ml of a 2% aqueous NaOH solution, the dispersion is stirred for 16 hours while the temperature is kept at 25°C, and $SiO_2$ in the filtrate is subjected to colorimetric determination (as for the colorimetric determination, refer to Yukagaku, Vol. 25, p. 156 (1976)), the soluble amount of the oil-absorbing carrier is not more than 0.5 g. The oil-absorbing carriers satisfying this condition include sodium mordenite HSZ-640 NAA (manufactured by Tosoh Corporation) and some of the amorphous aluminosilicates represented by the above formula.

On the other hand, the oil-absorbing carriers include also one wherein the pH of a 5% dispersion thereof is less than 9.0 but the solubility thereof in a 2% aqueous NaOH solution is not more than 0.5 g. Such an oil-absorbing carrier is also within the scope of the present invention. For example, Perlite 4159, which is a clayey substance manufactured by Dicalite Orient Co., Ltd., has such properties and is usable as the porous oil-absorbing carrier in the present invention.

The oil-absorbing carrier described above is incorporated in an amount of 5 to 30% by weight, preferably 5 to 10% by weight, based on the whole composition. When the amount is less than 5% by weight, the occlusion of the nonionic surfactant used in the present invention becomes difficult, and when it exceeds 30% by weight, the amounts of the other components are undesirably restricted.

In the detergent composition of the present invention, carbonates may be added to the above components, if necessary. A preference is given to sodium carbonate and potassium carbonate. Examples of sodium carbonates include heavy sodium carbonate (heavy ash) and light sodium carbonate (light ash). It has an average particle diameter of 10 to 2000 μm, preferably 100 to 1000 μm.

These carbonates are normally incorporated in an amount of 5 to 35% by weight, preferably 5 to 30% by weight, based on the whole composition. When the amount is less than 5% by weight, the resulting composition cannot

be said to have sufficient alkaline capacity, and when it exceeds 35% by weight, no further improvements in washing power are observed.

(3) Third Embodiment

Conventionally, it has been a common practice to formulate clothing item detergents for households or professionals with oxygen-based bleaching agents for purposes such as maintaining whiteness of the clothing item, removing stains and other purposes.

The third embodiment of the present invention provides a detergent composition suitable for concentration by incorporating the oxygen-based bleaching agent therewith, thereby optimally achieving the performance of the oxygen-based bleaching agent.

In the third embodiment of the present invention, the detergent composition comprises:

(a) a surfactant;
(b) the synthesized inorganic ion exchange material as described above and/or a hydrate thereof; and
(c) an oxygen-based bleaching agent.
wherein the amount of said oxygen-based bleaching agent is 0.5 to 40% by weight based on the whole composition.

The surfactant (a) and the above inorganic ion exchange material and/or the hydrate thereof (b) in the third embodiment are as described above.

Examples of oxygen-based bleaching agents in the present invention include sodium percarbonate (hydrogen peroxide adduct of sodium carbonate), sodium perborate monohydrate, sodium perborate tetrahydrate, hydrogen peroxide adduct of urea, $4Na_2SO_4 \cdot 2H_2O_2 \cdot NaCl$, sodium peroxide and calcium peroxide. Among these bleaching agents, at least one member selected from the group consisting of sodium percarbonate, sodium perborate monohydrate and sodium perborate tetrahydrate are preferred from the viewpoint of storage stability and availability.

These oxygen-based bleaching agents may be coated or used in combination with a stabilizer to maintain the stability of the bleaching agent itself and the product formulated therewith.

The oxygen-based bleaching agent is contained at normally 0.5 to 40% by weight, preferably 2 to 30% by weight in the whole composition. When the amount is less than 0.5% by weight, sufficient bleaching effects cannot be expected, and when it exceeds 40% by weight, the amounts of the other components contained in the detergent are restricted, failing to have a good balance of the components as a detergent.

When using an oxygen-based bleaching agent, the detergent composition of the present invention may further contain at least one bleaching activator (organic peracid precursor) selected from the group consisting of the following (A), (B) and (C):

(A) An organic peracid precursor which produces an organic peracid having an $N^+$ group upon reaction with hydrogen peroxide.
(B) An organic peracid precursor which produces an organic peracid upon reaction with hydrogen peroxide wherein the leaving group is phenolsulfonic acid or a salt thereof.
(C) An organic peracid precursor which produces a peracetic acid upon reaction with hydrogen peroxide.

Examples of the bleaching activator (A) used for the present invention include organic peracid precursors such as those disclosed in Japanese Patent Laid-Open Nos. 233969/1988, 315666/1988, 68347/1989, 190654/1989 and 17196/1991.

Such organic peracid precursors are preferably acyl compounds represented by Formula (I):

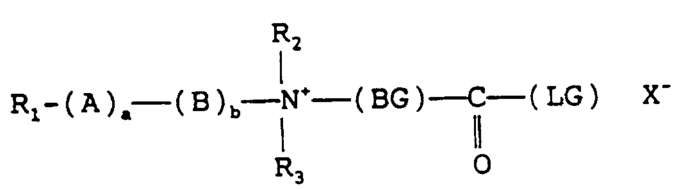

(I)

wherein $R_1$ is a linear or branched alkyl group of carbon number 1 to 18; $R_2$ and $R_3$ independently represent an alkyl group of carbon number 1 to 2; BG represents a binding group; LG represents a leaving group; $X^-$ represents an inorganic or organic counter ion; a and b are $a = b = 0$ or $a = b = 1$ ; A represents:

-O-,

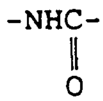, 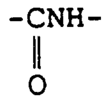, 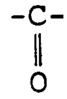, 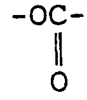, 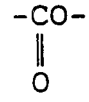,

or

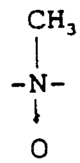 ;

and

B represents:

$-(CH_2)_c-$, $-(OCH_2CH_2)_d-$ or

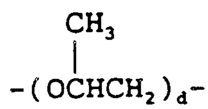

wherein c is an integer of 1 to 12, preferably 1 to 5; and d is an integer of 1 to 10, preferably 1 to 5.

With respect to Formula (I), although the binding group is not particularly subject to limitations, it may be exemplified by alkylene groups, cycloalkylene groups, phenylene or alkylenephenylene groups and oxyalkylene groups ($-CH_2CH_2O-$).

In addition, although the leaving groups are not particularly limitative, examples thereof include:

(a) 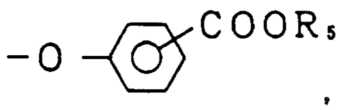 , (b) 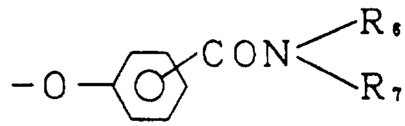

(c) 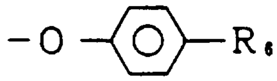 , (d) 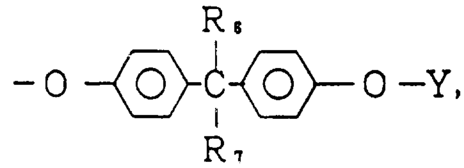

(e) 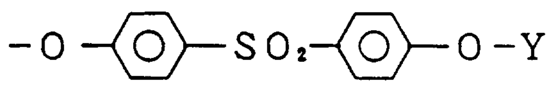 ,

(f) 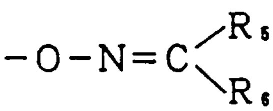 , (g) 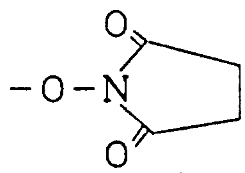 ,

(h) 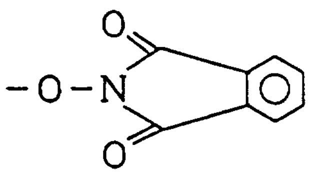 , (i) 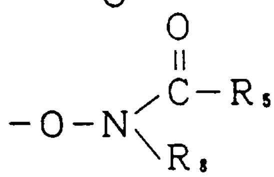 ,

(j) 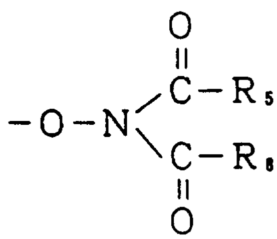 , (k) 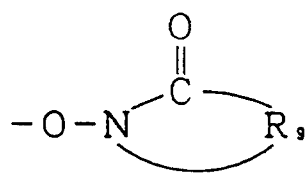

(l) 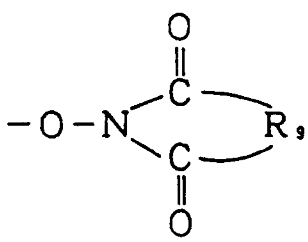

(m) glycerin residue, (n) sugar derivative residue,

(o) 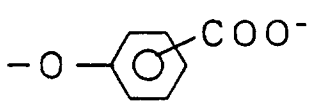 or 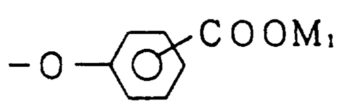

(p) 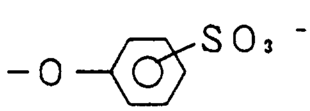 or 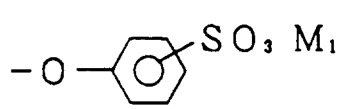

(q) $-O-R_9-SO_3^-$,

(r) 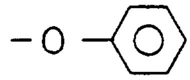

wherein $R_5$ and $R_6$ independently represent an alkyl group; $R_6$ and $R_7$ independently represent a hydrogen atom or an alkyl group; $R_9$ represents an alkylene group or alkenylene group; $M_1$ represents a hydrogen atom or an alkali metal atom; and Y represents a hydrogen atom or a group represented by the following formula:

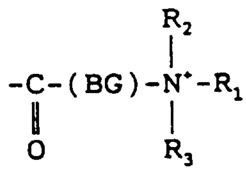

wherein $R_1$, $R_2$, $R_3$ and BG are as defined above.

In Formula (I), $X^-$ represents an inorganic or organic counter ion, but when the leaving group is represented by the following formula, $X^-$ does not exist.

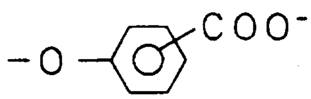 , 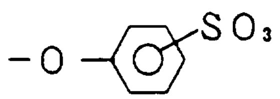

With respect to the compounds of Formula (I), a preference is given to those wherein the binding group is $-(CH_2)_{1-12}-$, particularly $-(CH_2)_{1-5}$, -the leaving group is represented by the structural formula (a), (b), (c), (d), (f), (g), (m), (n), (o), (p) or (q), $R_5$ is a $C_{1-2}$ alkyl group, each of $R_6$ and $R_7$ is H or a $C_{1-2}$ alkyl group, $R_8$ is a $C_{1-2}$ alkyl group and $R_9$ is a $C_{1-3}$ alkylene group, with a greater preference given to the compound represented by the structural formula (o) or (p).

The nitrile compound represented by the following formula is also useful as a bleaching activator.

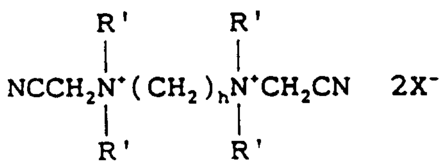

wherein R' represents an alkyl group of carbon number 1 to 3; $X^-$ represents an organic or inorganic counter ion; and h represents an integer of 1 to 16.

Among the bleaching activator (A), particularly desirable ones are those shown by the following formulas:

(s)

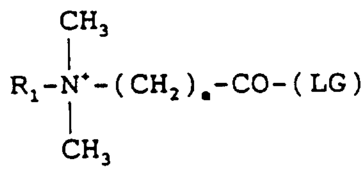

(t)

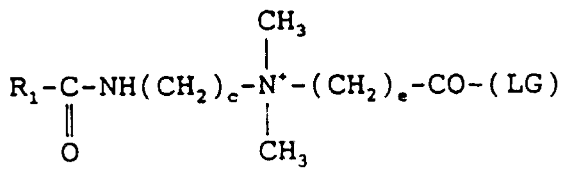

(u)

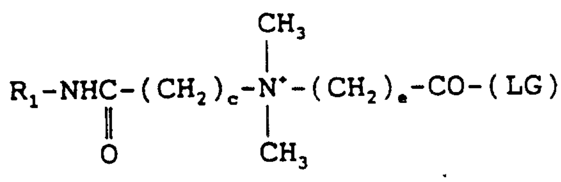

(v)

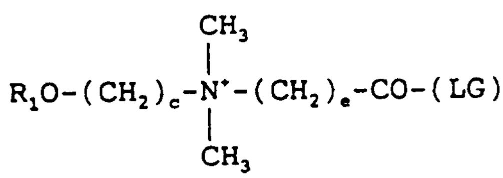

(w)

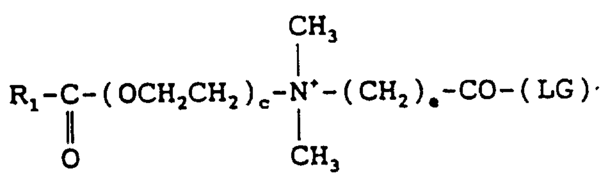

wherein $R_1$ and c are as defined above; e represents an integer of 1 to 10; LG represents a leaving group as defined (o) and (p) above.

The bleaching activator (B) used for the present invention is an organic peracid precursor which produces an organic peracid upon reaction with hydrogen peroxide wherein the leaving group is phenolsulfonic acid or a salt thereof, and is disclosed, for instance, in Japanese Patent Laid-Open Nos. 22999/1984, 258447/1988 and 31566/1988.

Typical examples are compounds of the following two structures, which are not to be construed as limitative.

(1)

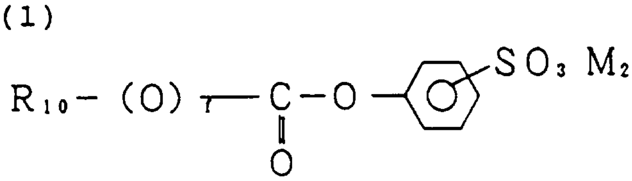

wherein $R_{10}$ represents an alkyl group of carbon number 1 to 14; f is an integer of 0 or 1; and $M_2$ represents a hydrogen atom or an alkali metal; and

(2)

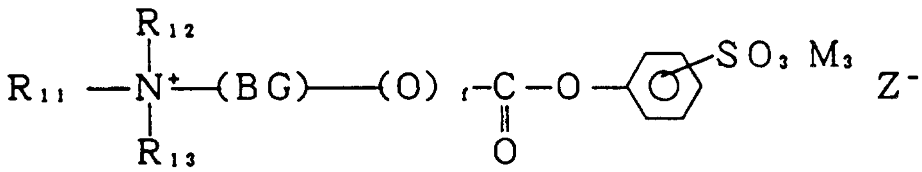

wherein $R_{11}$ represents an alkyl group of carbon number 1 to 14 or $R_{14}$-X-Q group,

wherein $R_{14}$ represents an alkyl group of carbon number 1 to 14; and X represents:

-O-,

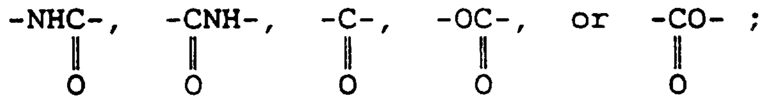

or ;

Q represents $-(CH_2)_g-$ or $-(OCH_2CH_2)_g-$; and g represents an integer of 1 to 11; $R_{12}$ and $R_{13}$ independently represents an alkyl group of carbon number 1 to 3; a binding group is usually $-(CH_2)_g-$, wherein g is as defined above; f is an integer of 0 or 1; $M_3$ and $Z^-$ may not be present, or when present, $M_3$ is a hydrogen atom or an alkali metal and $Z^-$ represents an anion such as a halogen ion.

The bleaching activator (C) used for the present invention is an organic peracid precursor which produces a peracetic acid upon reaction with hydrogen peroxide, and is exemplified by tetraacetylethylenediamine (TAED), acetoxybenzenesulfonic acid, tetraacetylglycoluril (TAGU) and glucose pentaacetate (GPAC).

The amount of the bleaching activator described above is normally 0.1 to 15% by weight, preferably 1 to 10% by weight in the whole composition. When the amount is less than 0.1% by weight, no bleaching activating effects are obtained. When it exceeds 15% by weight, further addition of the bleaching activator to the composition shows no significant effects, but merely increases the costs thereof.

(4) Fourth embodiment

In detergents for clothing items, detergents have recently been formulated with enzymes to decompose and remove the target dirt in the field of the art. However, it has been pointed out that the components of the detergents and the chlorine dissolved in tap water decrease the enzymatic activities.

In the fourth embodiment, such a problem is eliminated by providing a detergent composition excellent in stability of the enzyme during long-time storage and suitable for concentration.

In the fourth embodiment of the present invention, the detergent composition comprises:

(a) a surfactant;

(b) the synthesized inorganic ion exchange material as described above and/or a hydrate thereof; and

(c) an enzyme.

The surfactant (a) and the above inorganic ion exchange material and/or the hydrate thereof (b) in the fourth embodiment are as described above.

The enzymes used for the present invention are enzymes capable of hydrolyzing dirt as a substrate. Such hydrolytic enzymes include the following:

Carboxylate hydrolase, thiol ester hydrolase, phosphate monoester hydrolase and phosphate diester hydrolase, all of which act on ester linkage; glycoxide hydrolase, which acts on glycoxy compounds; enzymes which hydrolyze N-glycosyl compounds; thioether hydrolase, which acts on ether linkage; α-amino-acyl-peptide hydrolase, peptidyl-amino acid hydrolase, acyl-amino acid hydrolase, dipeptide hydrolase and peptidyl-peptide hydrolase, all of which act on peptide linkage, with a preference given to carboxylate hydrolase, glycoside hydrolase and peptidyl-peptide hydrolase.

More specifically, the preferred hydrolytic enzymes are exemplified as follows:

1. Proteases belonging to the class peptidyl-peptide hydrolase

Examples suitable to the present invention include pepsin, pepsin B, rennin, trypsin, chymotrypsin A, chymotrypsin B, elastase, enterokinase, cathepsin C, papain, chymopapain, ficin, thrombin, fibrinolysin, renin, subtilisin, aspergillopeptidase A, collagenase, clostridiopeptidase B, kallikrein, gastrisin, cathepsin D, bromelain, keratinase, chymotrypsin C, pepsin C, cocoonase, aspergillopeptidase B and urokinase. Other proteases are carboxypeptidases A and B and aminopeptidase.

2. Glycoside hydrolases

Cellulase, α-amylase, β-amylase, isoamylase, pullulanase, glucoamylase, isopertase, lysozyme, pectinase, chitinase, dextranase and others are preferable, with a greater preference given to cellulase, α-amylase, β-amylase and pullulanase.

3. Carboxylate ester hydrolases

Examples of carboxylate ester hydrolases preferred for the present invention include carboxyl esterase, lipase, pectinesterase and chlorophyllase, and lipase is particularly effective.
These enzymes may be selected from the same type of the enzyme alone, as in the case of selection of two or more proteases. Alternatively, they may be selected from two or more types, as in the case where a protease and an amylase are selected.
The enzymes used in the present invention may be those widely distributed in animals, plants, bacteria and fungi, and partially purified fraction thereof, which are not construed to be limitative thereto.
Examples of commercially available enzyme products and manufacturers thereof are as follows: "Alkalase," "Esperase," "Sabinase," "AMG," "BAN," "Fungamill," "Sweetzyme," "Termamill," "Lipolase" (Novo Industry, Copenhagen, Denmark); "Maksatase P," "High-alkaline protease," "Amylase THC", "Lipase" (Gist Brocades, N.V., Delft, Holland); "Protease B-400," "Protease B-4000," "Protease AP" and "Protease AP 2100" (Schweizerische Ferment A.G., Basel, Switzerland); "CRD-Protease" (Monsanto Company, St. Louis, Missouri, U.S.A.); "Piocase" (Piopin Corporation, Monticello, Illinois, U.S.A.); "Pronase-P," "Pronase-AS," "Pronase-AF" (Kaken Chemical Co., Ltd., Japan); "Lapidase P-2000" (Lapidas, Secran, France); protease products (Tyler standard sieve, 100% pass 16 mesh and 100% on 150 mesh) (Clington Corn Products (Division of Standard Brands Corp., New York); "Takamine," "Bromelain 1:10," "HT Protease 200," "Enzyme L-W" (obtained from fungi, not from bacteria) (Miles Chemical Company, Elkhart, Ind., U.S.A.); "Rozyme P-11 Conc.," "Pectinol," "Lipase B," "Rozyme PF," "Rozyme J-25" (Rohm & Haas, Philadelphia, U.S.A.); "Ambrozyme 200" (Jack Wolf & Co., Ltd., Subsidiary of Nopco Chemical Company, Newark, N.J., U.S.A.); "ATP 40," "ATP 120," "ATP 160" (Lapidas, Secran, France); "Oripase" (Nagase & Co., Ltd., Japan); "API-21" (Showa Denko K.K.).
Examples of the commercially available cellulases may be as follows:

(1) Cellulase AP (Amano Pharmaceutical Co., Ltd.);
(2) Cellulosin AP (Ueda Chemical Co., Ltd.);
(3) Cellulosin AC (Ueda Chemical Co., Ltd.);
(4) Cellulase-Onozuka (Kinki Yakult Seizo Co., Ltd.);
(5) Pancellase (Kinki Yakult Seizo Co., Ltd.);
(6) Macerozyme (Kinki Yakult Seizo Co., Ltd.);
(7) Meicelase (Meiji Seika Kaisha, Ltd.);
(8) Celluzyme (Nagase Co., Ltd.);
(9) Soluble sclase (Sankyo Co., Ltd.);
(10) Sanzyme (Sankyo Co., Ltd.);
(11) Cellulase A-12-C (Takeda Chemical Industries, Ltd.);
(12) Toyo-Cellulase (Toyo Jozo Co., Ltd.);
(13) Driserase (Kyowa Hakko Kogyo Co., Ltd.);
(14) Luizyme (Luipold Werk);
(15) Takamine-Cellulase (Chemische Fabrik);
(16) Wallerstein-Cellulase (Sigma Chemicals);
(17) Cellulase Type 1 (Sigma Chemicals);
(18) Cellulase Serva (Serva Laboratory);
(19) Cellulase 36 (Rohm and Haas);

(20) Miles Cellulase 4,000 (Miles);
(21) R&H Cellulase 35,36,38 conc (Philip Morris);
(22) Combizym (Nysco Laboratory);
(23) Cellulase (Makor Chemicals);
(24) Cellucrust (NOVO Industry); and
(25) Cellulase (Gist-Brocades).

Other enzymes include "Splentase 200L" (tradename, Amano Pharmaceutical Co., Ltd.), "Promozyme" (tradename, NOVO Industry), "Isoamilase" (Reagent, Seikagaku Kogyo), etc.

Further, examples of proteases include those disclosed in European Patent Publication No. 496361, and examples of cellulase include those disclosed in U.S. Patent Nos. 4,822,516 and 4,978,470, and WO8909259, WO9110732 and WO9117243.

These enzymes may be contained in an amount of normally 0.001 to 10% by weight, preferably 0.005 to 5% by weight, and more preferably 0.01 to 2% by weight. When the amount is less than 0.001% by weight, the effects of the present invention cannot be achieved, and when it exceeds 10% by weight, further addition of the enzymes to the composition shows no significant effects, but merely increases the costs thereof.

When using such an enzyme, a reducing agent may be contained at 0.01 to 5% by weight based on the whole composition in order to enhance the effects of the enzyme. The reducing agent is preferably an inorganic reducing agent, which reduces and removes the residual chlorine dissolved in tap water and should not decrease the enzyme activity.

The reducing agent used for the present invention is exemplified by sulfurous acid, disulfurous acid, thiosulfuric acid and salts thereof. These reducing agents may be used singly or in combination.

The amount of these reducing agents is normally 0.01 to 5% by weight, preferably 0.05 to 2% by weight based on the whole composition. When the amount is less than 0.01% by weight, residual chlorine elimination is insufficient. When it exceeds 5% by weight, further addition of the reducing agents to the composition shows no significant effects, but merely increases the costs thereof.

The detergent compositions which are exemplified by the above-mentioned embodiments of the present invention may incorporate the following various additives appropriately according to various purposes.

(1) Rinsing agents:

In washing clothing items at homes etc., rinsing ability such as good lather removal and disappearance of turbidity at the time of washing and rinsing is required for detergents from the viewpoint of users' convenience. To improve such rinsing ability, the following rinsing agents can be used appropriately in the present invention.

Although known ordinary rinsing agents can be used for this purpose, it is preferable to use at least one member selected from the group consisting of 1) through 3) described below from the viewpoint of the rinsing effects and compatibility with the inorganic ion exchange material.

1) Silicone
2) Salt of fatty acid of carbon number 8 to 20.
3) Polyoxyethylene polyoxypropylene alkyl ether having an alkyl group of carbon number 8 to 20, and having ethylene oxide added thereto in a molar number of 3 to 14 and propylene oxide added thereto in an average molar number of 1 to 14.

The silicones of 1) are exemplified by dimethylsilicone oil, silicone paste, silicone emulsion, organically modified polysiloxane and fluorosilicone oil, with a preference given to those prepared by absorbing them to silica powder.

The salt of fatty acid of 2), which has a carbon number 8 to 20, may be a salt of any saturated or unsaturated fatty acid, and is exemplified by palm acids based mainly on lauric acid, beef tallow fatty acids based mainly on oleic acid and palm fatty acids.

The polyoxyethylene polyoxypropylene alkyl ether of 3), which has an alkyl group of carbon number of 8 to 20, with ethylene oxide added thereto in a molar number of 3 to 14 and propylene oxide added thereto in an average molar number of 1 to 14, is a block type polyoxyethylene polyoxypropylene alkyl ether represented by the following formula:

$$RO(C_2H_4O)_a\text{-}(C_3H_6O)_b\text{-}H$$

$C_2H_4O$ : Ethylene oxide block
$C_3H_6O$ : Propylene oxide block

wherein R is a linear or branched alkyl group of carbon number 8 to 20; "a" represents a number of 3 to 14; and "b" represents a number of 1 to 14.

With respect to the above formula, the linear or branched alkyl group of carbon number 8 to 20 represented by R is exemplified by linear primary alcohols derived from natural materials and synthetic alcohols (primary, secondary) derived from petrochemical derivatives. "a" represents a number of 3 to 14. When "a" is less than 3, its solubility is poor. When "a" exceeds 14, the rinsing effects is lowered. "b" represents a number of 1 to 14. When "b" exceeds 14, its solubility is poor.

The amount of the rinsing agent described above is normally 0.02 to 5% by weight, preferably 0.05 to 3% by weight in the whole composition. When the amount is less than 0.02% by weight, no effects for improving rinsing ability are obtained. When it exceeds 5% by weight, no further improvements in rinsing ability are obtained, while turbidity undesirably takes place.

(2) Fluorescent dyes

In detergents for clothing items, it is a common practice to formulate the detergent with a fluorescent dye for the purpose of maintaining whiteness for the laundry. The following fluorescent dyes can be used when it is intended to obtain a detergent offering good tone stability in storage.

Although said fluorescent dye may be a known ordinary fluorescent dye, it is preferable to use an anionic fluorescent dye, particularly an anionic fluorescent dye having a sulfone group. Specifically, it is preferable to use at least one fluorescent dye selected from the group consisting of the following 1) through 10) from the viewpoint of brightening effect of clothing item, price and other factors.

1) 4,4'-Bis[{4-anilino-6-(2-hydroxyethyl)amino-1,3,5-triazin-2-yl}amino]stilbene-2,2'-disulfonic acid disodium salts
2) 4,4'-Bis{(4-anilino-6-morpholino-1,3,5-triazin-2-yl)amino}stilbene-2,2'-disulfonic acid disodium salts
3) 4,4'-Bis[{4-anilino-6-bis(2-hydroxyethyl)amino-1,3,5-triazin-2-yl}amino]stilbene-2,2'-disulfonic acid disodium salts
4) 4,4'-Bis{(4-amino-6-anilino-1,3,5-triazin-2-yl)-amino}stilbene-2,2'-disulfonic acid disodium salts
5) 4,4'-Bis[{4-anilino-6-(N-methyl-N-2-hydroxyethylamino)-1,3,5-triazin-2-yl}amino]stilbene-2,2'-disulfonic acid disodium salts
6) 4,4'-Bis{(4-anilino-6-methoxy-1,3,5-triazin-2-yl)-amino}stilbene-2,2'-disulfonic acid disodium salts
7) 4,4'-Bis{(4-toluidino-6-morpholino-1,3,5-triazin-2-yl)amino}stilbene-2,2'-disulfonic acid disodium salts
8) 4,4'-Bis(2-sulfostyryl)biphenyl disodium salts
9) 4,4'-Bis(4-phenyl-1,2,3-triazol-2-yl)stilbene-2,2'-disulfonic acid disodium salts
10) 4-(2H-naphto[1,2-d]triazol-2-yl)stilbene-2-sulfonic acid sodium salts

Although the amounts of the fluorescent dyes are not particularly imitative, they are normally 0.02 to 3% by weight, preferably 0.1 to 2% by weight based on the whole composition. When the amount is less than 0.2% by weight, sufficient improvement in whitening by the addition of fluorescent dye cannot be obtained, and when it exceeds 3% by weight, the toning of the powder detergent may be impaired.

(3) Detergent builders

The detergent composition of the present invention contains an inorganic ion exchange material as described above and/or a hydrate thereof, and a surfactant, and may further incorporate various additives which are normally added to detergents. Such additives are preferably detergent builders. Examples of usable detergent builders are the inorganic compounds and/or organic compounds exemplified below.

Examples of the detergent builders are crystalline or amorphous aluminosilicates as described below.

(1) Crystalline aluminosilicate salts represented by the following formula:

$$p(Mb_2O \text{ or } M''O) \cdot Al_2O_3 \cdot qSiO_2 \cdot wH_2O$$

wherein Mb represents an alkali metal atom; M" represents an alkaline earth metal atom exchangeable with calcium; p, q and w represent mol numbers of the respective components, which generally fall in the ranges of $0.7 \leqq p \leqq 1.5$, $0.8 \leqq q \leqq 6$ and w is an arbitrary positive number.

Among them, those represented by the following formula are preferred as detergent builders:

$$Na_2O \cdot Al_2O_3 \cdot rSiO_2 \cdot w'H_2O$$

wherein r represents a number of 1.8 to 3.0, and w' represents a number of 1 to 6.

(2) Amorphous aluminosilicate salts represented by the following formula:

$$tQ_2O \cdot Al_2O_3 \cdot uSiO_2 \cdot wH_2O$$

wherein Q represents a sodium atom and/or a potassium atom; t, u and w represent mol numbers of the respective components, which generally fall in the ranges of $0.7 < t \leqq 1.2$, $1.6 \leqq q \leqq 2.8$ and w is an arbitrary positive number.

Besides them, phosphates such as tripolyphosphate and pyrophosphate, aminotri(methylenephosphonic acid), 1-hydroxyethylidene-1,1-diphosphonic acid, ethylenediaminetetra(methylenephosphonic acid), diethylenetriaminepenta(methylenephosphonic acid), salts thereof, salts of phoshonocarboxylic acid such as 2-phosphonobutane-1,2-dicarboxylic acid, salts of amino acid such as aspartic acid or glutamic acid, aminopolyacetates such as nitrilotriacetate and ethylenediaminetetraacetate, polymeric electrolytes such as polyacrylic acid and polyaconitic acid, non-dissociative polymers such as polyethylene glycol, polyvinyl alcohol and polyvinylpyrrolidone, the polyacetal carboxylic acid polymer described in Japanese Patent Laid-Open No. 52196/1979, salts of organic acid such as diglycollate and oxycarboxylate, and other builders and divalent metal ion sequestering agents; alkali agents or inorganic electrolytes such as silicates, carbonates and sulfates; and re-contamination inhibitors such as the layered silicate described in Japanese Patent Laid-Open No. 227895/1985, polyvinylpyrrolidone and carboxymethyl cellulose.

The detergent composition of the present invention may also contain caking inhibitors such as p-toluenesulfonates, sulfosuccinates, talc and calcium silicate, antioxidants such as tertiary butylhydroxytoluene and distyrenated cresol, blueing agents, flavoring agents and other substances, all of which may be added according to purposes of use without limitations.

The detergent compositions of the present invention containing each of the components described above may be produced by any of the conventionally known methods without limitation.

Examples of the methods for producing the high density detergent include those disclosed in Japanese Patent Laid-Open Nos. 69897/1986, 69899/1986 and 69900/1986 and EP Publication No. 513824A.

The detergent composition of the present invention may be used for various uses such as clothing item detergents, tableware detergents, body detergents and metal detergents.

The inorganic ion exchange material of the present invention is excellent in both cationic exchange capacity and anti-solubility, making it useful to be used for a water softener and alkalinity regulator in detergents.

The detergent composition of the present invention contains an inorganic ion exchange material which has anti-solubility as well as excellent ion exchange capacity and alkaline capacity, thereby offering excellent washing effects and is suitable for the concentration of detergent.

The detergent composition of the present invention is also excellent in washing power for dirt.

Moreover, the detergent composition of the present invention is excellent in washing power for dirt caused by fatty acids and change in solubility with time owing to the containment of a porous oil-absorbing carrier.

Also, the detergent composition of the present invention offers high bleaching rates by fully utilizing the performance of an oxygen-based bleaching agent when it is contained therein.

## EXAMPLES

The present invention will be further described by means of the following working examples, comparative examples, detergent compositions, comparative detergent compositions and test examples, without intending to restrict the scope of the present invention thereto.

The measurements shown in Examples and Comparative Examples are obtained as follows:

(1) Cationic exchange capacity

A 0.1 g sample is accurately weighed and added to 100 ml of a calcium chloride aqueous solution (500 ppm concentration, when calculated as $CaCO_3$), followed by stirring at 25°C for 60 minutes, after which the mixture is filtered using Membrane Filter (made of nitrocellulose; manufactured by Advantech) of 0.2 µm pore size. 10 ml of the filtrate is assayed for Ca content by an EDTA titration, and the calcium ion exchange capacity (cation exchange capacity) of the sample is calculated from the titer.

(2) Amount of Si dissolved

A 2 g sample is added to 100 g of ion exchanged water, followed by stirring at 25°C for 30 minutes. Centrifugation is then conducted, and the supernatant is filtered through Membrane Filter of 0.2 µm pore size. The Si concentration in the filtrate is determined by inductively coupled plasma (ICP) emission analysis, and the amount of Si dissolved is calculated when calculated as $SiO_2$.

(3) Raman peak strength ratio

In the Raman scattering spectrometry obtained by using the Fourier transform Raman spectrophotometer JSR-FT6500N model (manufactured by JEOL Ltd.; excited beam: YAG laser; wavelength: 1064 nm; detector: InGaAs), the relative strength ratio $Q_2/Q_3$ is calculated by determining the scattering strength of respective peaks of $Q_2$ and $Q_3$ as the peak top value of the peaks appearing at $970 \pm 20$ $cm^{-1}$ and $1070 \pm 30$ $cm^{-1}$.

Example 1

To 100 parts by weight of No. 2 sodium silicate ($SiO_2/Na_2O$ = 2.55; moisture content: 59.9%), 10.4 parts by weight of sodium hydroxide is added, followed by stirring using a homomixer to dissolve the sodium hydroxide. To this solution, 6.3 parts by weight of finely milled anhydrous calcium carbonate is added, and they are mixed by using a homomixer. A given amount of the mixture is transferred into a nickel crucible and baked in the air at a temperature of 700°C for 1 hour, followed by rapid cooling. The obtained baked product is milled to yield an inorganic ion exchange material 1 of the present invention. As is seen in Table 1, this powder is found to have a high cationic exchange capacity of 303 $CaCO_3$ mg/g and an excellent antisolubility of 46.0 $SiO_2$ mg/g as of the amount of Si dissolved.

Examples 2 through 6

Inorganic ion exchange materials 2 through 4 are obtained in the same manner as in Example 1 except that the amount of anhydrous calcium carbonate added is changed to provide the compositions shown in Table 1. Also, inorganic ion exchange materials 5 and 6 are obtained in the same manner as in Example 1 except that anhydrous magnesium carbonate is used in the place of the anhydrous calcium carbonate to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion exchange material 1.

Example 7

An inorganic ion exchange material 7 is obtained in the same manner as in Example 1 except that No. 1 sodium silicate ($SiO_2/Na_2O$ = 2.14; moisture content: 44.9%) is used in the place of the No. 2 sodium silicate to provide the composition shown in Table 1. The obtained powder is analyzed for cationic exchange capacity and the amount of Si dissolved. As seen from the results given in Table 1, the powder material is excellent in both cationic exchange capacity and anti-solubility in the same manner as in the inorganic ion exchange material 1.

Example 8

An inorganic ion exchange material 8 is obtained in the same manner as in Example 7 except that anhydrous magnesium carbonate is used in the place of the anhydrous calcium carbonate to provide the composition shown in Table 1. The obtained powder is analyzed for cationic exchange capacity and the amount of Si dissolved. As seen from the results given in Table 1, the powder material is excellent in both cationic exchange capacity and anti-solubility in the same manner as in the inorganic ion exchange material 1.

Example 9

To 100 parts by weight of No. 1 sodium silicate powder ($SiO_2/Na_2O$ = 2.11; moisture content: 22.1%), 1.8 parts by weight of sodium hydroxide, 0.9 parts by weight of anhydrous calcium carbonate and 1.5 parts by weight of magnesium hydroxide are added, and they are mixed by using a ball-mill. A given amount of the mixture is transferred into a nickel crucible and baked in the air at a temperature of 600°C for 1 hour, followed by rapid cooling. The obtained baked product is milled to yield an inorganic ion exchange material 9 of the present invention. The obtained powder is analyzed for cationic exchange capacity and the amount of Si dissolved. As seen from the results given in Table 1, the powder material is excellent in both cationic exchange capacity and anti-solubility in the same manner as in the inorganic ion exchange material 1.

Example 10

An inorganic ion exchange material 10 is obtained in the same manner as in Example 9 except that the amounts of anhydrous calcium carbonate and magnesium hydroxide added are changed to provide the compositions shown in Table 1. The obtained powder is analyzed for cationic exchange capacity and the amount of Si dissolved. As seen from the results given in Table 1, the powder material is excellent in both cationic exchange capacity and anti-solubility in the same manner as in the inorganic ion exchange material 1.

Examples 11 through 13

Inorganic ion exchange materials 11 through 13 are obtained in the same manner as in Example 9 except that 325 mesh-passed silica rock powder ($SiO_2$ purity: 99.9%) and potassium hydroxide are used in the place of the powdery No. 1 sodium silicate and the sodium hydroxide to provide the compositions shown in Table 1. The obtained powders are analyzed for cationic exchange capacity and the amount of Si dissolved. As seen from the results given in Table 1, the powder materials are excellent in both cationic exchange capacity and anti-solubility in the same manner as in the inorganic ion exchange material 1.

Examples 14 and 15

Silica rock powder, potassium hydroxide and magnesium hydroxide are mixed in the same manner as in Example 11 to provide the compositions shown in Table 1. This mixture is melted at a temperature of 1300°C for 8 hours, followed by rapid cooling to obtain cullets. To 1 part by weight of the cullets exceeding 100 mesh, 5 parts by weight of ion exchange water is added, and the mixture is subjected to a hydrothermal treatment at a pressure of 3 $kg/cm^2$ for 1 hour using an autoclave to yield water glass. A given amount of each water glass is transferred into a nickel crucible and baked in the air at a temperature of 650°C for 1 hour, followed by rapid cooling. The obtained baked product is milled to yield the powders of inorganic ion exchange materials 14 and 15 of the present invention. The obtained powders are analyzed for cationic exchange capacity and the amount of Si dissolved. As seen from the results given in Table 1, the powder materials are excellent in both cationic exchange capacity and anti-solubility in the same manner as in the inorganic ion exchange material 1.

Examples 16 through 18

Silica sand ($SiO_2$ purity: 99.7%), potassium hydroxide, anhydrous calcium carbonate and magnesium hydroxide are mixed in the same manner as in Example 11 to provide the compositions shown in Table 1. Each of the mixture is melted at a temperature of 1300°C for 20 hours, followed by rapid cooling to obtain a glassified product (cullets). To 1 part by weight of the 100 mesh-passed cullets, 4 parts by weight of ion exchange water is added, and a given amount of the mixture is transferred into a nickel crucible and baked in the air at a temperature of 600°C for 2 hours, followed by rapid cooling. The obtained baked product is milled to yield inorganic ion exchange materials 16 through 18 of the present invention. The obtained powders are analyzed for cationic exchange capacity and the amount of Si dissolved. As seen from the results given in Table 1, the powder materials are excellent in both cationic exchange capacity and anti-solubility in the same manner as in the inorganic ion exchange material 1.

Examples 19 and 20

Inorganic ion exchange materials 19 and 20 are obtained in the same manner as in Example 1 except that potassium hydroxide is used together with the sodium hydroxide and that anhydrous magnesium carbonate is used together with the anhydrous calcium carbonate to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion exchange material 1.

Examples 21 and 22

Inorganic ion exchange materials 21 and 22 are obtained in the same manner as in Example 7 except that potassium hydroxide is used together with the sodium hydroxide and that magnesium hydroxide is used together with the anhydrous calcium carbonate to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion

exchange material 1.

Examples 23 through 27

Inorganic ion exchange materials 23 through 27 are obtained in the same manner as in Example 9 except that potassium hydroxide is used together with the sodium hydroxide to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion exchange material 1.

Examples 28 through 32

Inorganic ion exchange materials 28 through 32 are obtained in the same manner as in Example 14 except that sodium hydroxide is used together with the potassium hydroxide and that anhydrous calcium carbonate and magnesium hydroxide are used together therewith to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion exchange material 1.

Examples 33 through 37

Inorganic ion exchange materials 33 through 37 are obtained in the same manner as in Example 16 except that sodium hydroxide is used together with the potassium hydroxide and that anhydrous calcium carbonate and magnesium hydroxide are used together therewith to provide the compositions shown in Table 1. The obtained powders are analyzed for cationic exchange capacity and the amount of Si dissolved. As seen from the results given in Table 1, these powder materials are excellent in both cationic exchange capacity and anti-solubility in the same manner as in the inorganic ion exchange material 1.

Figure 1 shows the Raman spectrum of the inorganic ion exchange material obtained in Example 35, in comparison with the spectrum of the sodium disilicate ($Na_2Si_2O_5$) obtained in Comparative Example 1 described below. As is clear from Figure 1 (a), the inorganic ion exchange material is a substance having a chain structure by the appearance of the characteristic main scattering peak at $970 \pm 20$ $cm^{-1}$ assigned to the $Q_2$ unit.

Example 38

A powder having the composition shown in Table 1 is prepared as an anhydrous product in the same manner as in Example 1. 10 g of the powder is dispersed in 500 ml of an ion exchange water for 1 hour, followed by filtration using a Membrane Filter having a pore size of 0.2 µm. The residue on the filter is dried at a temperature of 100°C for 16 hours to yield an inorganic ion exchange material 38 in the form of a hydrate. The obtained powder is analyzed for cationic exchange capacity and the amount of Si dissolved. As seen from the results given in Table 1, the powder material is excellent in both cationic exchange capacity and anti-solubility in the same manner as in the inorganic ion exchange material 1.

Comparative Example 1

To 100 parts by weight of No. 2 sodium silicate, 4.2 parts by weight of sodium hydroxide is added, and the sodium hydroxide is dissolved by using a homomixer. A given amount of the solution is transferred into a nickel crucible and baked in the air at a temperature of 700°C for 1 hour, followed by rapid cooling. The obtained baked product is milled to yield a comparative powder material 1. As is seen in Table 1, although this powder material is found to have a cationic exchange capacity of 224 $CaCO_3$ mg/g, it has a poor anti-solubility of 133 $SiO_2$ mg/g as of the amount of Si dissolved. The reasons for such poor anti-solubility are presumably that although this powder material has sufficient cationic exchange sites, since the Ca or Mg component having a function for the structural stability is not included in the structure thereof, the solubility becomes high.

Comparative Example 2

325 mesh-passed silica rock powder and potassium hydroxide are mixed by a V-type mixer to provide the composition shown in Table 1, and a given amount of the mixture is transferred into a nickel crucible and baked in the air at a temperature of 700°C for 1 hour, followed by rapid cooling. The obtained baked product is milled to yield a comparative powder material 2. As is seen from Table 1, although this powder material is found to have a cationic exchange capacity of 462 $CaCO_3$ mg/g, it has a poor anti-solubility of 531 $SiO_2$ mg/g as of the amount of Si dissolved for the same reasons as in Comparative Example 1. Therefore, it is insufficient property for a detergent builder.

Comparative Example 3

To an aqueous solution of No. 2 sodium silicate, potassium hydroxide is added to provide the composition shown in Table 1, and a given amount of the mixture is transferred into a nickel crucible and baked in the air at a temperature of 650°C for 1 hour, followed by rapid cooling. The obtained baked product is milled to yield a comparative powder material 3. As is seen in Table 1, although this powder material is found to have a cationic exchange capacity of 399 $CaCO_3$ mg/g, it has a poor anti-solubility of 309 $SiO_2$ mg/g as of the amount of Si dissolved for the same reasons as in Comparative Example 1. Therefore, it is insufficient property for a detergent builder.

Comparative Example 4

Slaked lime is mixed in an aqueous solution of No. 2 sodium silicate, and this mixture is subjected to hydrothermal synthesis in an autoclave at a pressure of 9 $kg/cm^2$ for 20 hours to yield a comparative powder material 4 of the composition shown in Table 1. As is seen in Table 1, although this powder is found to be excellent in anti-solubility as demonstrated by the low amount of Si dissolved, it has an insufficient cationic exchange capacity of not more than 200 $CaCO_3$ mg/g. The reasons for such an insufficient cationic exchange capacity are presumable that the Ca or Mg component having a function for the structural stability is excessively included in the structure thereof, resulting in a undesirable decrease in the cationic exchange sites, while remarkably decreasing the amount of Si dissolved.

Comparative Example 5

No. 1 sodium silicate, potassium hydroxide, anhydrous calcium carbonate and magnesium hydroxide are mixed to provide the composition shown in Table 1. A given amount of the mixture is transferred into a nickel crucible and baked in the air at a temperature of 700°C for 1 hour, followed by rapid cooling. The obtained baked product is milled to yield a comparative powder material 5. As is seen in Table 1, although this powder is found to be excellent in anti-solubility as demonstrated by the low amount of Si dissolved, it has an insufficient cationic exchange capacity of not more than 200 $CaCO_3$ mg/g for the same reasons as in Comparative Example 4.

Table 1

| | Example No. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| $M_2O$ | $Na_2O$ | $Na_2O$ | $Na_2O$ | $Na_2O$ | $Na_2O$ | $Na_2O$ | $Na_2O$ | $Na_2O$ | $Na_2O$ | $Na_2O$ | $K_2O$ | $K_2O$ |
| K/Na | — | — | — | — | — | — | — | — | — | — | — | — |
| y/x | 1.50 | 1.70 | 2.00 | 1.00 | 1.00 | 1.20 | 1.80 | 1.60 | 2.00 | 1.75 | 2.00 | 1.00 |
| M'O | CaO | CaO | CaO | CaO | MgO | MgO | CaO | MgO | CaO•MgO | CaO•MgO | CaO | CaO |
| z/x | 0.20 | 0.40 | 0.20 | 0.30 | 0.20 | 0.30 | 0.03 | 0.01 | 0.08 | 0.008 | 0.10 | 0.10 |
| Mg/Ca | — | — | — | — | — | — | — | — | 3.00 | 0.75 | — | — |
| Cationic Exchange Capacity ($CaCO_3$mg/g) | 303 | 222 | 243 | 264 | 418 | 258 | 251 | 321 | 242 | 299 | 252 | 450 |
| Amount of Si Dissolved ($SiO_2$mg/g) | 46.0 | 14.1 | 19.7 | 59.1 | 68.8 | 44.6 | 91.1 | 96.5 | 87.4 | 105 | 49.4 | 90.4 |
| $Q_2/Q_3$ Raman Peak Strength Ratio | 7.69 | 0.17 | 0.12 | 6.67 | $Q_3$=0 | 8.33 | 0.14 | 0.50 | 0.11 | 0.17 | 0.12 | 7.14 |

Table 1-Continued

| | Example No. | | | | | | | | | |
|---|---|---|---|---|---|---|---|---|---|---|
| | 13 | 14 | 15 | 16 | 17 | 18 | 19 | 20 | 21 | 22 |
| $M_2O$ | $K_2O$ | $K_2O$ | $K_2O$ | $K_2O$ | $K_2O$ | $K_2O$ | $Na_2O \cdot K_2O$ | $Na_2O \cdot K_2O$ | $Na_2O \cdot K_2O$ | $Na_2O \cdot K_2O$ |
| K/Na | — | — | — | — | — | — | 0.50 | 0.25 | 1.00 | 1.03 |
| y/x | 1.70 | 1.50 | 1.20 | 1.50 | 1.00 | 1.25 | 1.25 | 1.70 | 1.00 | 1.50 |
| M'O | MgO | MgO | MgO | CaO | CaO•MgO | CaO•MgO | CaO | MgO | CaO•MgO | CaO•MgO |
| z/x | 0.20 | 0.30 | 0.30 | 0.008 | 0.06 | 0.75 | 0.40 | 0.02 | 0.16 | 0.05 |
| Mg/Ca | — | — | — | — | 1.00 | 2.00 | — | — | 0.25 | 0.50 |
| Cationic Exchange Capacity ($CaCO_3$ mg/g) | 253 | 242 | 247 | 318 | 249 | 287 | 269 | 307 | 351 | 326 |
| Amount of Si Dissolved ($SiO_2$ mg/g) | 44.9 | 33.3 | 45.0 | 111 | 86.4 | 10.5 | 20.3 | 89.7 | 50.4 | 44.4 |
| $Q_2/Q_3$ Raman Peak Strength Ratio | 0.18 | 0.68 | 4.76 | 0.39 | 1.27 | 0.53 | 0.90 | 0.30 | 5.26 | 0.92 |

Table 1-Continued

| | Example No. | | | | | | |
|---|---|---|---|---|---|---|---|
| | 23 | 24 | 25 | 26 | 27 | 28 | 29 |
| $M_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ |
| K/Na | 0.05 | 4.00 | 0.25 | 1.25 | 0.10 | 2.00 | 0.80 |
| y/x | 0.80 | 2.00 | 1.80 | 1.50 | 1.25 | 1.75 | 1.25 |
| M'O | CaO | MgO | CaO•MgO | CaO•MgO | CaO•MgO | CaO | MgO |
| z/x | 0.80 | 0.04 | 0.40 | 0.15 | 0.35 | 0.01 | 0.22 |
| Mg/Ca | – | – | 0.33 | 3.00 | 0.10 | – | – |
| Cationic Exchange Capacity ($CaCO_3$ mg/g) | 216 | 307 | 277 | 265 | 311 | 333 | 301 |
| Amount of Si Dissolved ($SiO_2$ mg/g) | 18.3 | 88.8 | 20.4 | 60.0 | 18.8 | 98.3 | 20.6 |
| $Q_2/Q_3$ Raman Peak Strength Ratio | $Q_3=0$ | 0.12 | 0.17 | 0.34 | 3.57 | 0.16 | 1.89 |

Table 1-Continued

| | Example No. | | | | | | |
|---|---|---|---|---|---|---|---|
| | 30 | 31 | 32 | 33 | 34 | 35 | 36 |
| $M_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ | $Na_2O \cdot K_2O$ |
| K/Na | 0.08 | 0.06 | 0.10 | 2.50 | 1.50 | 0.10 | 2.00 |
| y/x | 1.50 | 1.75 | 2.00 | 2.00 | 1.50 | 1.75 | 1.25 |
| M' O | $CaO \cdot MgO$ | $CaO \cdot MgO$ | $CaO \cdot MgO$ | CaO | MgO | $CaO \cdot MgO$ | $CaO \cdot MgO$ |
| z/x | 0.08 | 0.03 | 0.006 | 0.20 | 0.12 | 0.006 | 0.35 |
| Mg/Ca | 4.00 | 0.25 | 0.20 | — | — | 0.05 | 0.40 |
| Cationic Exchange Capacity ($CaCO_3$ mg/g) | 312 | 300 | 248 | 348 | 299 | 333 | 291 |
| Amount of Si Dissolved ($SiO_2$ mg/g) | 64.4 | 90.0 | 106 | 52.1 | 61.2 | 110 | 28.3 |
| $Q_2/Q_3$ Raman Peak Strength Ratio | 0.85 | 0.19 | 0.13 | 0.11 | 0.61 | 0.42 | 3.23 |

Table 1-Continued

| | Example No. | | Comparative Example No. | | | | |
|---|---|---|---|---|---|---|---|
| | 37 | 38 | 1 | 2 | 3 | 4 | 5 |
| $M_2O$ | $Na_2O \cdot K_2O$ | $Na_2O \cdot H_2O$ | $Na_2O$ | $K_2O$ | $Na_2O \cdot K_2O$ | $Na_2O$ | $Na_2O \cdot K_2O$ |
| K/Na | 3.25 | H/Na=1 | — | — | 0.50 | — | 0.12 |
| y/x | 1.60 | 1.00 | 2.00 | 1.00 | 1.00 | 4.00 | 1.50 |
| M'O | CaO·MgO | CaO | — | — | — | CaO | CaO·MgO |
| z/x | 0.18 | 0.50 | — | — | — | 1.50 | 1.50 |
| Mg/Ca | 1.25 | — | — | — | — | — | 1.00 |
| Cationic Exchange Capacity ($CaCO_3$ mg/g) | 303 | 230 | 224 | 462 | 399 | 175 | 154 |
| Amount of Si Dissolved ($SiO_2$ mg/g) | 59.8 | 55.5 | 133 | 531 | 309 | 4.8 | 7.3 |
| $Q_2/Q_3$ Raman Peak Strength Ratio | 0.21 | 3.70 | 0.07 | — | — | 0.01 | — |

Examples of Detergent Compositions:

Detergent Compositions 1-1 through 1-73

The synthesized inorganic ion exchange materials A through G obtained in the above Examples are used to prepare the detergent compositions of the present invention having the compositions shown in Tables 2 through 8 by the method described below. The synthesized inorganic ion exchange materials A through G are, respectively, the synthesized inorganic ion exchange materials obtained in Examples 3, 35, 31, 34, 5, 12 and 38.

Specifically, for Detergent Compositions 1-1 through 1-14, the components other than the synthesized inorganic ion exchange material are prepared as an aqueous slurry of 60% solid content, which is spray dried to yield grains, in which inorganic ion exchange material powder is mixed. For Detergent Compositions 1-15 through 1-25 and Detergent Compositions 1-39 through 1-68, the components other than the inorganic ion exchange material are prepared as a slurry of 60% solid content, which is spray dried to yield grains, which are granulated in the presence of a corresponding amount of inorganic ion exchange material powder in a mixer granulator. For Detergent Compositions 1-26 through 1-38 and Detergent Compositions 1-69 through 1-73, the starting material powder is faced in a tumbling mixer granulator and subjected to mixing granulation while gradually introducing a liquid nonionic surfactant.

Powdery detergent compositions of average grain size of 200 to 500 µm are thus obtained.

Comparative Detergent Compositions 1-1 through 1-10

The comparative detergent compositions having the compositions shown in Tables 2 through 6 are prepared in the same manner as in Detergent Compositions except that Zeolite 4A is used in place of the synthesized inorganic ion exchange material powder, or that the synthesized inorganic ion exchange material powder is omitted.

Comparative Detergent Compositions 1-11 and 1-12

The comparative detergent compositions having the compositions shown in Table 7 are prepared in the same manner as in Detergent Compositions 1-46 through 1-68 except that Zeolite 4A or trisodium citrate • dihydrate is used in place of the synthesized inorganic ion exchange material powder and that the amount of each component is adjusted so as to give a pH equivalent to those of Detergent Compositions 1-46 through 1-68.

Comparative Detergent Compositions 1-13 and 1-14

The comparative detergent compositions having the compositions shown in Table 8 are prepared in the same manner as in Detergent Compositions 1-69 through 1-73 except that Zeolite 4A or trisodium citrate • dihydrate is used in the place of the synthesized inorganic ion exchange material powder and that the amount of each component is adjusted so as to give a pH equivalent to those of Detergent Compositions 1-69 through 1-73.

Test Example 1

Detergent Compositions 1-1 through 1-14 and Comparative Detergent Compositions 1-1 and 1-2 are used to carry out a deterging test under the following conditions:

(Preparation of Artificially Stained Cloth)

Cotton test pieces of 10 cm x 10 cm stained with oil and fat having the following compositions and trace amounts of carbon black are prepared.

| | |
|---|---|
| Cotton seed oil | 60% |
| Cholesterol | 10% |
| Oleic acid | 10% |
| Palmitic acid | 10% |
| Liquid and solid paraffins | 10% |

(Deterging Conditions)

Washing is carried out using a twin tub type washing machine ("Ginga," manufactured by Toshiba Corporation) by washing at a temperature of 20°C for 10 minutes in 3°DH (Ca/Mg=3/1) water having a detergent concentration of 0.133%; rinsing with running water for 8 minutes.

(Calculation of Deterging Rate)

Reflectivities of the original cloth before the washing and those of the stained cloth before and after the washing are measured at 550 mμ by means of an automatic recording colorimeter (manufactured by Shimadzu Corporation), and the deterging rate D(%) is calculated by the following equation. The results thereof are shown in Table 2.

$$D = (L_2 - L_1)/(L_0 - L_1) \times 100(\%)$$

wherein

$L_0$: Reflectivity of the original cloth;
$L_1$: Reflectivity of the stained cloth before washing; and
$L_2$: Reflectivity of the stained cloth after washing.

Table 2

| | Detergent Composition 1- | | | | | | | | | | | | | | Comparative Detergent Composition | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 1-1 | 1-2 |
| LAS-Na(C12-14) | 16 | 16 | 16 | — | — | 16 | 16 | 16 | 16 | 16 | 16 | 16 | 16 | 16 | 16 | 16 |
| AS-Na (C12-18) | 6 | — | — | — | — | 6 | 6 | 6 | 6 | 6 | 6 | 6 | 6 | 6 | 6 | 6 |
| AOS-Na(C12-18) | — | 6 | — | — | 11 | — | — | — | — | — | — | — | — | — | — | — |
| α-SFE-Na(C14-18) | — | — | 6 | 22 | 11 | — | — | — | — | — | — | — | — | — | — | — |
| Sodium tripolyphosphate | — | — | — | — | — | — | — | — | — | — | — | 10 | — | — | — | — |
| Zeolite 4A | — | — | — | — | — | — | — | — | — | — | — | — | 10 | — | 20 | — |
| Trisodium citrate•$2H_2O$ | — | — | — | — | — | — | — | — | — | — | — | — | — | 10 | — | — |
| Sodium carbonate | 17 | 17 | 17 | 23 | 17 | 17 | 17 | 17 | 17 | 17 | 17 | 17 | 17 | 17 | 17 | 17 |
| Sodium silicate (JIS No.2) | 6 | 6 | 6 | — | 6 | 6 | 6 | 6 | 6 | 6 | 6 | 6 | 6 | 6 | 6 | 6 |
| Sodium sulfate | Bal. | Bal. | Bal. | Bal. | Bal. | Bal. | Bal. | Bal. | Bal. | Bal. | Bal. | Bal. | Bal. | Bal. | Bal. | Bal. |
| CMC-Na | 2 | 2 | 2 | 2 | 2 | 2 | 2 | 2 | 2 | 2 | 2 | 2 | 2 | 2 | 2 | 2 |
| Water | 5 | 5 | 5 | 5 | 5 | 5 | 5 | 5 | 5 | 5 | 5 | 5 | 5 | 5 | 5 | 5 |
| Ion Exchange Material A | 20 | 20 | 20 | 20 | 20 | — | — | — | — | — | — | 10 | — | — | — | — |
| Ion Exchange Material B | — | — | — | — | — | 20 | — | — | — | — | — | — | — | — | — | — |
| Ion Exchange Material C | — | — | — | — | — | — | 20 | — | — | — | — | — | — | — | — | — |
| Ion Exchange Material D | — | — | — | — | — | — | — | 20 | — | — | — | — | — | — | — | — |
| Ion Exchange Material E | — | — | — | — | — | — | — | — | 20 | — | — | — | 10 | — | — | — |
| Ion Exchange Material F | — | — | — | — | — | — | — | — | — | 20 | — | — | — | 10 | — | — |
| Ion Exchange Material G | — | — | — | — | — | — | — | — | — | — | 20 | — | — | — | — | — |
| Deterging Rate (%) | 65.2 | 64.0 | 63.3 | 60.1 | 62.0 | 66.8 | 68.3 | 64.3 | 66.0 | 64.0 | 63.8 | 67.0 | 65.5 | 65.8 | 65.0 | 49.8 |

Incidentally, the abbreviations used in Table 2 and hereinafter are as follows:

| | |
|---|---|
| LAS-Na: | Sodium linear alkylbenzene sulfonate; |
| AS-Na : | Sodium alkyl sulfate; |
| AOS-Na: | Sodium α-olefinsulfonate; |
| AOS-K : | Potassium α-olefinsulfonate; |
| α-SFE-Na: | α-Sulfofatty acid methyl ester sodium salt; |
| CMC-Na: | Carboxymethylcellulose sodium salt; |
| ES-Na : | Sodium alkyl ether sulfate; |
| TAED : | Tetraacetylethylenediamine; and |
| Bal. : | Balance. |

Test Example 2

The washing test is carried out in the same manner as in Test Example 1 except Detergent Compositions 1-15 through 1-25 and Comparative Detergent Compositions 1-3 and 1-4 are used, and that the deterging conditions are changed as shown below:

(Deterging Conditions)

Washing is carried out using a fully automatic washing machine ("Aisaigo," manufactured by Matsushita Electric Industrial Co., Ltd.) by washing in a standard cycle at a temperature of 20°C in 3.5°DH (Ca/Mg=3/1) water having a detergent concentration of 0.0833%. The results thereof are shown together in Table 3.

Table 3

| | Detergent Composition 1- | | | | | | | | | | | Comparative Detergent Composition | |
|---|---|---|---|---|---|---|---|---|---|---|---|---|---|
| | 15 | 16 | 17 | 18 | 19 | 20 | 21 | 22 | 23 | 24 | 25 | 1-3 | 1-4 |
| LAS-Na(C12-14) | 25 | 16 | 20 | 25 | 25 | 25 | 25 | 25 | 25 | 25 | 25 | 25 | 25 |
| AS-Na (C10-18) | 7 | – | 7 | 7 | 7 | 7 | 7 | 7 | 7 | 7 | 7 | 7 | 7 |
| AOS-K (C14-18) | – | 16 | – | – | – | – | – | – | – | – | – | – | – |
| Soap (C12-18) | 3 | 3 | 3 | 3 | 3 | 3 | 3 | 3 | 3 | 3 | 3 | 3 | 3 |
| Zeolite 4A | – | – | – | – | – | – | – | – | – | 20 | – | 30 | – |
| Trisodium citrate$\cdot 2H_2O$ | – | – | – | – | – | – | – | – | – | – | 10 | – | – |
| Sodium carbonate | Bal. | Bal. | Bal. | Bal. | Bal. | Bal. | Bal. | Bal. | Bal. | Bal. | Bal. | Bal. | Bal. |
| Potassium carbonate | – | 4 | – | – | – | – | – | – | – | – | – | – | – |
| Polyethylene glycol | 1 | 2 | 2 | 1 | 1 | 1 | 1 | 1 | 1 | 1 | 1 | 1 | 1 |
| Sodium polyacrylate | 4 | 0 | 4 | 4 | 4 | 4 | 4 | 4 | 4 | 4 | 4 | 4 | 4 |
| Water | 5 | 5 | 5 | 5 | 5 | 5 | 5 | 5 | 5 | 5 | 5 | 5 | 5 |
| Ion Exchange Material A | 30 | 30 | 30 | – | – | – | – | – | – | 10 | 20 | – | – |
| Ion Exchange Material B | – | – | – | 30 | – | – | – | – | – | – | – | – | – |
| Ion Exchange Material C | – | – | – | – | 30 | – | – | – | – | – | – | – | – |
| Ion Exchange Material D | – | – | – | – | – | 30 | – | – | – | – | – | – | – |
| Ion Exchange Material E | – | – | – | – | – | – | 30 | – | – | – | – | – | – |
| Ion Exchange Material F | – | – | – | – | – | – | – | 30 | – | – | – | – | – |
| Ion Exchange Material G | – | – | – | – | – | – | – | – | 30 | – | – | – | – |
| Deterging Rate (%) | 68.2 | 62.2 | 62.0 | 68.1 | 67.6 | 65.1 | 67.0 | 66.6 | 64.8 | 68.2 | 66.7 | 67.1 | 52.0 |

Test Example 3

The washing test is carried out in the same manner as in Test Example 1 except that Detergent Compositions 1-26 through 1-38 and Comparative Detergent Compositions 1-5 and 1-6 are used, and that the deterging conditions

are changed as shown below:

(Deterging Conditions)

Washing is carried out using a Turgotometer by washing at a rotational speed of 100 rpm, at a temperature of 20°C for 10 minutes in 3°DH (Ca/Mg=3/1) water having a detergent concentration of 0.0833%. The results thereof are shown together in Table 4.

Table 4

| | Detergent Composition 1- | | | | | | | | | | | | | Comparative Detergent Composition | |
|---|---|---|---|---|---|---|---|---|---|---|---|---|---|---|---|
| | 26 | 27 | 28 | 29 | 30 | 31 | 32 | 33 | 34 | 35 | 36 | 37 | 38 | 1-5 | 1-6 |
| Polyoxyethylene primary alcohol C12 alkyl ether EOp=8 | 25 | — | — | — | 25 | 25 | 25 | 25 | 25 | 25 | 25 | 25 | 25 | 25 | 25 |
| Polyoxyethylene secondary alcohol C12-14 alkyl ether EOp=7 | — | 10 | 30 | 20 | — | — | — | — | — | — | — | — | — | — | — |
| Fatty acid diethanolamide (C12-16) | — | — | — | 5 | — | — | — | — | — | — | — | — | — | — | — |
| Zeolite 4A | — | — | — | — | — | — | — | — | — | — | 10 | — | — | 35 | — |
| Sodium tripolyphosphate | — | — | — | — | — | — | — | — | — | — | — | 10 | — | — | — |
| Trisodium citrate·$2H_2O$ | — | — | — | — | — | — | — | — | — | — | — | — | 20 | — | — |
| Sodium carbonate | Bal. | Bal. | Bal. | Bal. | Bal. | Bal. | Bal. | Bal. | Bal. | Bal. | Bal. | Bal. | Bal. | Bal. | Bal. |
| Amorphous silica | 10 | 4 | 20 | 10 | 10 | 10 | 10 | 10 | 10 | 10 | 10 | 10 | 10 | 10 | 10 |
| CMC-Na | 2 | 2 | 2 | 2 | 2 | 2 | 2 | 2 | 2 | 2 | 2 | 2 | 2 | 2 | 2 |
| Water | 5 | 5 | 5 | 5 | 5 | 5 | 5 | 5 | 5 | 5 | 5 | 5 | 5 | 5 | 5 |
| Ion Exchange Material A | 35 | 50 | 25 | 35 | — | — | — | — | — | — | 20 | 20 | 10 | — | — |
| Ion Exchange Material B | — | — | — | — | 35 | — | — | — | — | — | — | — | — | — | — |
| Ion Exchange Material C | — | — | — | — | — | 35 | — | — | — | — | — | — | — | — | — |
| Ion Exchange Material D | — | — | — | — | — | — | 35 | — | — | — | — | — | — | — | — |
| Ion Exchange Material E | — | — | — | — | — | — | — | 35 | — | — | — | — | — | — | — |
| Ion Exchange Material F | — | — | — | — | — | — | — | — | 35 | — | — | — | — | — | — |
| Ion Exchange Material G | — | — | — | — | — | — | — | — | — | 35 | — | — | — | — | — |
| Deterging Rate (%) | 69.0 | 60.2 | 69.2 | 67.0 | 69.3 | 68.5 | 65.7 | 69.8 | 66.2 | 64.3 | 68.8 | 68.0 | 66.7 | 68.7 | 56.0 |

Test Example 4

The washing test is carried out in the same manner as in Test Example 1 except that Detergent Compositions 1-39 through 1-49 and Comparative Detergent Compositions 1-7 and 1-8 are used, and that the deterging conditions are changed as shown below:

(Deterging Conditions)

Washing is carried out using a fully automatic washing machine ("Model LA5580XT," manufactured by Whirlpool, U.S.A.) by washing in a standard cycle at a temperature of 35°C in 8°DH (Ca/Mg=2/1) water having a detergent concentration of 0.1%. The results thereof are shown together in Table 5.

Table 5

| | Detergent Composition 1- | | | | | | | | | | | Comparative Detergent Composition | |
|---|---|---|---|---|---|---|---|---|---|---|---|---|---|
| | 39 | 40 | 41 | 42 | 43 | 44 | 45 | 46 | 47 | 48 | 49 | 1-7 | 1-8 |
| LAS-Na(C12-14) | 13 | 10 | 13 | 13 | 13 | 13 | 13 | 13 | 13 | 13 | 13 | 13 | 13 |
| AS-Na (C10-18) | 5 | — | 5 | 5 | 5 | 5 | 5 | 5 | 5 | 5 | 5 | 5 | 5 |
| ES-Na(C10-18 EOp=2) | — | 5 | — | — | — | — | — | — | — | — | — | — | — |
| Soap (C12-18) | 1 | 1 | 1 | 1 | 1 | 1 | 1 | 1 | 1 | 1 | 1 | 1 | 1 |
| Polyoxyethylene alkyl ether C12-15 EOp=8 | 2 | 5 | 2 | 2 | 2 | 2 | 2 | 2 | 2 | 2 | 2 | 2 | 2 |
| Zeolite 4A | — | — | — | — | — | — | — | — | 20 | — | — | 40 | — |
| Sodium tripolyphosphate | — | — | — | — | — | — | — | — | — | 20 | — | — | — |
| Trisodium citrate·$2H_2O$ | — | — | — | — | — | — | — | — | — | — | 20 | — | — |
| Sodium carbonate | Bal. | Bal. | Bal. | Bal. | Bal. | Bal. | Bal. | Bal. | Bal. | Bal. | Bal. | Bal. | Bal. |
| Sodium silicate (JIS No.1) | 3 | 3 | 3 | 3 | 3 | 3 | 3 | 3 | 3 | 3 | 3 | 3 | 3 |
| Water | 5 | 5 | 5 | 5 | 5 | 5 | 5 | 5 | 5 | 5 | 5 | 5 | 5 |
| Ion Exchange Material A | 40 | 40 | — | — | — | — | — | — | 20 | 20 | 20 | — | — |
| Ion Exchange Material B | — | — | 40 | — | — | — | — | — | — | — | — | — | — |
| Ion Exchange Material C | — | — | — | 40 | — | — | — | — | — | — | — | — | — |
| Ion Exchange Material D | — | — | — | — | 40 | — | — | — | — | — | — | — | — |
| Ion Exchange Material E | — | — | — | — | — | 40 | — | — | — | — | — | — | — |
| Ion Exchange Material F | — | — | — | — | — | — | 40 | — | — | — | — | — | — |
| Ion Exchange Material G | — | — | — | — | — | — | — | 40 | — | — | — | — | — |
| Deterging Rate (%) | 71.0 | 72.0 | 73.3 | 71.7 | 69.9 | 72.1 | 70.3 | 69.2 | 72.0 | 72.7 | 70.8 | 70.6 | 62.0 |

Test Example 5

The washing test is carried out in the same manner as in Test Example 1 except that Detergent Compositions

1-50 through 1-60 and Comparative Detergent Compositions 1-9 and 1-10 are used, and that the deterging conditions are changed as shown below:

(Deterging Conditions)

Washing is carried out using a fully automatic washing machine ("WFK4000," manufactured by Bosch, drum-type) by washing in a standard cycle at a temperature of 60°C in 16°DH (Ca/Mg=2/1) water having a detergent concentration of 0.8%. The results thereof are shown together in Table 6.

Table 6

| | Detergent Composition 1- | | | | | | | | | | | Comparative Detergent Composition | |
|---|---|---|---|---|---|---|---|---|---|---|---|---|---|
| | 50 | 51 | 52 | 53 | 54 | 55 | 56 | 57 | 58 | 59 | 60 | 1-9 | 1-10 |
| LAS (C12-15) | 8.0 | 8.0 | 8.0 | 8.0 | 8.0 | 8.0 | 8.0 | 8.0 | 8.0 | 8.0 | 8.0 | 8.0 | 8.0 |
| Polyoxyethylene alkyl ether (C12-18 EOp=20) | 5.0 | 5.0 | 5.0 | 5.0 | 5.0 | 5.0 | 5.0 | 5.0 | 5.0 | 5.0 | 5.0 | 5.0 | 5.0 |
| Soap (C12-18) | 1.0 | 1.0 | 1.0 | 1.0 | 1.0 | 1.0 | 1.0 | 1.0 | 1.0 | 1.0 | 1.0 | 1.0 | 1.0 |
| Sodium tripolyphosphate | - | - | - | - | - | - | - | 30 | 15 | - | - | 35 | - |
| Zeolite 4A | - | - | - | - | - | - | - | - | - | 15 | - | - | - |
| NTA 3Na | - | - | - | - | - | - | - | - | - | - | 15 | - | - |
| Sodium carbonate | Bal. | Bal. | Bal. | Bal. | Bal. | Bal. | Bal. | Bal. | Bal. | Bal. | Bal. | Bal. | Bal. |
| Sodium silicate | 3 | 3 | 3 | 3 | 3 | 3 | 3 | 3 | 3 | 3 | 3 | 3 | 3 |
| Sodium sulfate | 3 | 3 | 3 | 3 | 3 | 3 | 3 | 3 | 3 | 3 | 3 | 3 | 3 |
| CMC-Na | 1 | 1 | 1 | 1 | 1 | 1 | 1 | 1 | 1 | 1 | 1 | 1 | 1 |
| $PB \cdot 4H_2O$ | 18 | 18 | 18 | 18 | 18 | 18 | 18 | 18 | 18 | 18 | 18 | 18 | 18 |
| TAED | 2 | 2 | 2 | 2 | 2 | 2 | 2 | 2 | 2 | 2 | 2 | 2 | 2 |
| Water | 5 | 5 | 5 | 5 | 5 | 5 | 5 | 5 | 5 | 5 | 5 | 5 | 5 |
| Ion Exchange Material A | 35 | - | - | - | - | - | - | 5 | 20 | 20 | 20 | - | - |
| Ion Exchange Material B | - | 35 | - | - | - | - | - | - | - | - | - | - | - |
| Ion Exchange Material C | - | - | 35 | - | - | - | - | - | - | - | - | - | - |
| Ion Exchange Material D | - | - | - | 35 | - | - | - | - | - | - | - | - | - |
| Ion Exchange Material E | - | - | - | - | 35 | - | - | - | - | - | - | - | - |
| Ion Exchange Material F | - | - | - | - | - | 35 | - | - | - | - | - | - | - |
| Ion Exchange Material G | - | - | - | - | - | - | 35 | - | - | - | - | - | - |
| Deterging Rate (%) | 70.5 | 71.8 | 70.6 | 69.3 | 72.2 | 70.1 | 69.8 | 71.2 | 71.3 | 72.0 | 70.3 | 70.2 | 53.2 |

Test Example 6

The washing test is carried out in the same manner as in Test Example 1 except that Detergent Compositions 1-61 through 1-68, Detergent Compositions 1-69 through 1-73 and Comparative Detergent Compositions 1-11 through 1-14 are used. The results thereof are shown together with the total amounts of the detergent composition, the used amounts thereof, the degree of concentration and pHs before and after washing in Tables 7 and 8.
In Table 7, in order to clearly distinguish the differences in composition ratios from Detergent Compositions 1-68 and Comparative Detergent Compositions 1-11 and 1-12, whose total amounts on 100 parts by weight, the total amounts of Detergent Compositions 1-61 through 1-67 are 75 parts by weight.
Similarly, in Table 8, in order to clearly distinguish the differences in composition ratios with Detergent Compositions 1-73 and Comparative Detergent Compositions 1-13 and 1-14, whose total amounts are 100 parts by weight, the total amounts of Detergent Compositions 1-69 through 1-72 are 80 parts by weight.

Table 7

| | Detergent Composition 1- | | | | | | | | Comparative Detergent Composition | |
|---|---|---|---|---|---|---|---|---|---|---|
| | 61 | 62 | 63 | 64 | 65 | 66 | 67 | 68 | 1-11 | 1-12 |
| LAS-Na (C12-14) | 25 | 25 | 25 | 25 | 25 | 25 | 25 | 25 | 25 | 25 |
| AS-Na (C12-18) | 7 | 7 | 7 | 7 | 7 | 7 | 7 | 7 | 7 | 7 |
| Tallow soap (C12-20) | 3 | 3 | 3 | 3 | 3 | 3 | 3 | 3 | 3 | 3 |
| Zeolite 4A | - | - | - | - | - | - | - | - | 30 | - |
| Trisodium citrate·$2H_2O$ | - | - | - | - | - | - | - | - | - | 30 |
| Ion Exchange Material A | 30 | - | - | - | - | - | - | 30 | - | - |
| Ion Exchange Material B | - | 30 | - | - | - | - | - | - | - | - |
| Ion Exchange Material C | - | - | 30 | - | - | - | - | - | - | - |
| Ion Exchange Material D | - | - | - | 30 | - | - | - | - | - | - |
| Ion Exchange Material E | - | - | - | - | 30 | - | - | - | - | - |
| Ion Exchange Material F | - | - | - | - | - | 30 | - | - | - | - |
| Ion Exchange Material G | - | - | - | - | - | - | 30 | - | - | - |
| Sodium carbonate | 4 | 4 | 4 | 4 | 4 | 4 | 4 | 27 | 27 | 27 |
| Sodium silicate (JIS No.2) | 1 | 1 | 1 | 1 | 1 | 1 | 1 | 3 | 3 | 3 |
| Water | 5 | 5 | 5 | 5 | 5 | 5 | 5 | 5 | 5 | 5 |
| Total Amount | 75 | 75 | 75 | 75 | 75 | 75 | 75 | 100 | 100 | 100 |
| Used Amount g/30 liter | 18.8 | 18.8 | 18.8 | 18.8 | 18.8 | 18.8 | 18.8 | 25 | 25 | 25 |
| Degree of Concentration | 1.33 | 1.33 | 1.33 | 1.33 | 1.33 | 1.33 | 1.33 | 1 | 1 | 1 |
| pH before Washing | 10.8 | 10.8 | 10.8 | 10.9 | 10.8 | 10.7 | 10.7 | 10.8 | 10.6 | 10.6 |
| pH after Washing | 10.2 | 10.4 | 10.4 | 10.4 | 10.2 | 10.2 | 10.2 | 10.3 | 9.9 | 10.0 |
| Deterging Rate (%) | 66.9 | 67.8 | 66.4 | 64.8 | 65.1 | 65.2 | 66.0 | 66.9 | 65.7 | 65.2 |

Table 8

| | Detergent Composition No. 1- | | | | | Comparative Detergent Composition | |
|---|---|---|---|---|---|---|---|
| | 69 | 70 | 71 | 72 | 73 | 1-13 | 1-14 |
| Polyoxyethylene primary alcohol C12 alkyl ether EOp=8 | 28 | 25 | - | 28 | 28 | 28 | 28 |
| Polyoxyethylene secondary alcohol C12-14 alkyl ether EOp=7 | - | - | 28 | - | - | - | - |
| Fatty acid diethanolamide (C12-16) | - | 3 | - | - | - | - | - |
| Zeolite 4A | - | - | - | - | - | 20 | - |
| Sodium tripolyphosphate | - | - | - | - | - | - | 20 |
| Trisodium citrate • $2H_2O$ | - | - | - | - | - | - | - |
| Sodium carbonate | 5 | 5 | 5 | 5 | 25 | 25 | 25 |
| Amorphous silica | 20 | 20 | 20 | 20 | 20 | 20 | 20 |
| CMC-Na | 2 | 2 | 2 | 2 | 2 | 2 | 2 |
| Water | 5 | 5 | 5 | 5 | 5 | 5 | 5 |
| Ion Exchange Material A | 20 | - | - | - | - | - | - |
| Ion Exchange Material E | - | 20 | - | - | - | - | - |
| Ion Exchange Material F | - | - | 20 | - | - | - | - |
| Ion Exchange Material G | - | - | - | 20 | 20 | - | - |
| Total Amount | 80 | 80 | 80 | 80 | 100 | 100 | 100 |
| Used Amount g/30 liter | 20 | 20 | 20 | 20 | 20 | 25 | 25 |
| Degree of Concentration | 1.25 | 1.25 | 1.25 | 1.25 | 1 | 1 | 1 |
| pH before Washing | 10.7 | 10.7 | 10.8 | 10.7 | 10.8 | 10.6 | 10.6 |
| pH after Washing | 10.3 | 10.3 | 10.4 | 10.4 | 10.4 | 10.1 | 10.0 |
| Deterging Rate (%) | 68.7 | 67.9 | 68.9 | 68.5 | 68.8 | 68.4 | 68.7 |

From the results shown in Tables 2 through 8, it is seen that the detergent composition of the present invention offers washing rates equivalent to those obtained using zeolite, a conventional ion exchange material for detergents (Comparative Detergent Compositions 1-1, 1-3, 1-5, 1-7 and 1-9). Also, in comparison with the absence of the synthesized inorganic ion exchange material (Comparative Detergent Compositions 1-2, 1-4, 1-6, 1-8, 1-10), fairly improved washing rates are obtained.

From the results shown in Tables 7 and 8, it is seen that the detergent compositions of the present invention (Detergent Compositions 1-46 through 1-73) offer equivalent washing performance with lower amounts of use, in comparison with conventional formulations (Comparative Detergent Compositions 1-11 through 1-14). This is because the synthesized inorganic ion exchange material of the present invention is of multiple functions excellent in both ion exchange capacity and alkaline capacity, and because its use makes it possible to obtain an equivalent washing performance with smaller amounts of use than the total amount of the ion exchange material and alkali agent used separately in considerable amounts in conventional formulations.

Detergent Compositions 2-1 through 2-13

The synthesized inorganic ion exchange materials A, E, F and G obtained in the above Examples are used to prepare the detergent compositions of the present invention having the compositions shown in Tables 9 through 11 by the method described below. The synthesized inorganic ion exchange materials A, E, F and G are, respectively, the synthesized inorganic ion exchange materials obtained in Examples 3, 5, 12 and 38.

Specifically, for Detergent Compositions 2-1 through 2-6 and Detergent Compositions 2-11 through 2-13, the components other than the synthesized inorganic ion exchange material are prepared as an aqueous slurry of 60% solid amount, which is spray dried to yield grains, which are granulated in the presence of a corresponding amount of inorganic ion exchange material powder in a mixer granulator. For Detergent Compositions 2-7 through 2-10, the starting material powder is placed in a tumbling mixer granulator and subjected to mixing granulation while gradually introducing a liquid nonionic surfactant and an aqueous polymeric solution (about 40% by weight).

Powdery detergent compositions of average grain size of 200 to 500 μm are thus obtained.

The following polymer (copolymer) is used.

A: Sodium polyacrylate
(weight-average molecular weight: 10,000)
B: Sodium salt of maleate/acrylate copolymer
(monomer ratio: 30/70; weight-average molecular weight: 70,000)
C: Sodium salt of maleate/isobutylene copolymer
(monomer ratio: 50/50; weight-average molecular weight: 10,000)
D: Sodium salt of maleate/methacrylate copolymer
(monomer ratio: 70/30; weight-average molecular weight: 50,000)
E: Potassium salt of hydrolyzate of maleate/vinyl acetate copolymer
(monomer ratio: 50/50; weight-average molecular weight: 7,000)

Comparative Detergent Compositions 2-1 through 2-9

The comparative detergent compositions are prepared in the same manner as in Detergent Compositions except that only the synthesized inorganic ion exchange material powder according to the present invention and the polymer are used at once to provide compositions shown in Tables 8 through 11.

Specifically, Comparative Detergent Compositions 2-1 through 2-3 and Comparative Detergent Compositions 2-7 through 2-9 are prepared by granulating in the same manner as in Detergent Compositions 2-1 through 2-6. Comparative Detergent Compositions 2-4 through 2-6 are prepared by granulating in the same manner as in Detergent Compositions 2-7 through 2-10.

Test Example 7

Detergent Compositions 2-1 through 2-6 and Comparative Detergent Compositions 2-1 through 2-3 are used to carry out a deterging test under the following conditions:

(Preparation of Artificially Stained Cloth)

"Kanuma sekigyoku soil" for horticultural use is dried at 120°C ± 5°C for 4 hours and then finely pulverized. 150 mesh (100 μm)-passed soil particles are dried at 120°C ± 5°C for 2 hours. 150 g of the soil particles is dispersed in 1 liter of tetrachloroethylene. A calico #2023 is contacted with the dispersion and brushed. After removal of the dispersion, excessive mud remaining on the cloth is removed (Japanese Patent Laid-Open No. 26473/1980).

Test pieces having a size of 10 cm x 10 cm are prepared and subjected to the test.

(Deterging Conditions)

Washing is carried out using a twin tub type washing machine ("Ginga," manufactured by Toshiba Corporation) by washing at a temperature of 20°C for 10 minutes in 3°DH (Ca/Mg=3/1) water having a detergent concentration of 0.0833%; rinsing with running water for 8 minutes.

(Calculation of Deterging Rate)

Reflectivities of the original cloth before the washing and those of the stained cloth before and after the washing are measured at 460 mμ by means of an automatic recording colorimeter (manufactured by Shimadzu Corporation), and the deterging rate D(%) is calculated in the same manner as in Test Example 1. The results thereof are shown in Table 9.

Table 9

| | Detergent Composition 2- | | | | | | Comparative Detergent Composition | | |
|---|---|---|---|---|---|---|---|---|---|
| | 1 | 2 | 3 | 4 | 5 | 6 | 2-1 | 2-2 | 2-3 |
| LAS-Na(C12-14) | 25 | 25 | 25 | 16 | 27 | 25 | 25 | 25 | 25 |
| AS-Na (C12-18) | 7 | 7 | 7 | - | - | - | 7 | 7 | 7 |
| AOS-K (C12-18) | - | - | - | 16 | - | 7 | - | - | - |
| α-SFE Na(C14-18) | - | - | - | - | 5 | - | - | - | - |
| Zeolite 4A | - | - | - | - | - | - | - | 30 | 30 |
| Ion Exchange Material A | 30 | 30 | 30 | - | - | - | 30 | - | - |
| Ion Exchange Material E | - | - | - | 30 | - | - | - | - | - |
| Ion Exchange Material F | - | - | - | - | 30 | - | - | - | - |
| Ion Exchange Material G | - | - | - | - | - | 30 | - | - | - |
| Sodium carbonate | Bal. | Bal. | Bal. | Bal. | Bal. | Bal. | Bal. | Bal. | Bal. |
| Sodium silicate(JIS No. 2) | 4 | 4 | 4 | 4 | 4 | 4 | 4 | 4 | 4 |
| Polymer A | 3 | - | - | 3 | 3 | 3 | - | 3 | - |
| Polymer B | - | 3 | - | - | - | - | - | - | - |
| Polymer C | - | - | 3 | - | - | - | - | - | - |
| Water | 5 | 5 | 5 | 5 | 5 | 5 | 5 | 5 | 5 |
| Deterging Rate (%) | 60.1 | 60.1 | 60.8 | 58.9 | 58.8 | 59.2 | 55.5 | 59.1 | 54.0 |

Test Example 8

The washing test is carried out in the same manner as in Test Example 7 except that Detergent Compositions 2-7 through 2-10 and Comparative Detergent Compositions 2-4 through 2-6 are used, and that the deterging conditions are changed as shown below:

(Deterging Conditions)

Washing is carried out using a fully automatic washing machine ("Aisaigo," manufactured by Matsushita Electric Industrial Co., Ltd.) by washing in a standard cycle at a temperature of 20°C in 3.5°DH (Ca/Mg=3/1) water having a detergent concentration of 0.0833%. The results thereof are shown together in Table 10.

Table 10

| | Detergent Composition 2- | | | | Comparative Detergent Composition | | |
|---|---|---|---|---|---|---|---|
| | 7 | 8 | 9 | 10 | 2-4 | 2-5 | 2-6 |
| Polyoxyethylene primary alcohol C12 alkyl ether EOp=8 | 25 | 25 | - | 25 | 25 | 25 | 25 |
| Polyoxyethylene synthetic oxoalcohol C11-15 alkyl ether EOp=7 | - | - | 20 | - | - | - | - |
| Soap (C12-20) | 1 | 1 | 0.5 | 1 | 1 | 1 | 1 |
| Zeolite 4A | - | - | - | 10 | - | 35 | 35 |

Table 10 (continued)

| | Detergent Composition 2- | | | | Comparative Detergent Composition | | |
|---|---|---|---|---|---|---|---|
| | 7 | 8 | 9 | 10 | 2-4 | 2-5 | 2-6 |
| Ion Exchange Material A | 35 | 35 | 42 | 25 | 35 | - | - |
| Sodium carbonate | Bal. | Bal. | Bal. | Bal. | Bal. | Bal. | Bal |
| Amorphous silica | 10 | 10 | 8 | 10 | 10 | 10 | 10 |
| Polymer D | 4 | - | 2 | 4 | - | 4 | - |
| Polymer E | - | 4 | 1 | - | - | - | - |
| Water | 5 | 5 | 5 | 5 | 5 | 5 | 5 |
| Deterging Rate (%) | 60.2 | 60.0 | 58.8 | 59.1 | 46.2 | 57.7 | 46.0 |

Test Example 9

The washing test is carried out in the same manner as in Test Example 7 except that Detergent Compositions 2-11 through 2-13 and Comparative Detergent Compositions 2-7 through 2-9 are used, and that the deterging conditions are changed as shown below:

(Deterging Conditions)

Washing is carried out using a fully automatic washing machine ("Model LA5580XT," manufactured by Whirlpool, U.S.A.) by washing in a standard cycle at a temperature of 35°C in 8°DH (Ca/Mg=2/1) water having a detergent concentration of 0.1%. The results thereof are shown together in Table 11.

Table 11

| | Detergent Composition 2- | | | Comparative Detergent Composition | | |
|---|---|---|---|---|---|---|
| | 11 | 12 | 13 | 2-7 | 2-8 | 2-9 |
| LAS-Na | 13 | 13 | 13 | 13 | 13 | 13 |
| AS-Na | 5 | 5 | 5 | 5 | 5 | 5 |
| Soap | 1 | 1 | 1 | 1 | 1 | 1 |
| Polyoxyethylene alkyl ether C12-15 EOp=8 | 2 | 2 | 2 | 2 | 2 | 2 |
| Sodium tripolyphosphate | - | - | 10 | 40 | 40 | - |
| Sodium carbonate | Bal. | Bal. | Bal. | Bal. | Bal. | Bal |
| Sodium silicate (JIS No. 1) | 3 | 3 | 3 | 3 | 3 | 3 |
| Water | 5 | 5 | 5 | 5 | 5 | 5 |
| Ion Exchange Material E | 40 | 40 | 30 | - | - | 40 |
| Polymer A | 2 | - | 2 | 2 | - | - |
| Polymer B | - | 2 | - | - | - | - |
| Deterging Rate (%) | 60.2 | 61.1 | 61.5 | 61.8 | 61.6 | 57. |

As is shown from the above results, the detergent compositions of the present invention offer fairly improved washing rates for mud stains, in comparison with the case where neither the synthesized inorganic ion exchange material nor (co)polymer of the present invention is used (Comparative Detergent Compositions 2-3 and 2-6) and the case where the (co)polymer alone of the present invention is not used (Comparative Detergent Compositions 2-1, 2-4 and 2-9).

Also, in comparison with the case where zeolite, a conventional ion exchange material for detergents, and the (co)polymer of the present invention are used (Comparative Detergent Compositions 2-2 and 2-5), equivalent or slightly improved washing rates for mud stains are obtained. Also, in comparison with the case where sodium tripolyphosphate, a conventional builder, (Comparative Detergent Compositions 2-7 and 2-8), nearly equivalent washing rates are obtained.

Detergent Compositions 3-1 through 3-23

Starting material powders, including the synthesized inorganic ion exchange materials A, E, F and G obtained in the above Examples and oil-absorbing carriers having the properties shown in Tables 12 and 13, are placed in a batch kneader (Bench Kneader PNV-1 manufactured by Irie Shokai) in amounts according to the detergent composition, and a liquid nonionic surfactant is gradually introduced thereinto to yield a powdery detergent compound of an average grain size of 350 to 450 µm. A surface modifying agent is added in an amount corresponding to the formulation composition to obtain a detergent composition of the present invention (final detergent product) having the composition shown in Tables 14 and 15.

Table 12

| Kind | pH of 5% Water Dispersion | Amount of Absorbed Oil (ml/100g) | $SiO_2$ Content (% by wt.) |
|---|---|---|---|
| TOKUSIL AL-1™ (Tokuyama Soda Co., Ltd.) | 9.2 | 255 | 94 |
| NIPSIL NA™ (Nippon Silica Ind.) | 10.2 | 245 | 93 |
| TIXOLEX 25™ (Kofran Chemical) | 9.8 | 235 | 72 |
| CARPLEX # 100™ (Shionogi Pharmacy) | 10.4 | 230 | 93 |
| SIPERNAT D 10™ (Degussa AG) | 10.3 | 240 | 98 |
| TOKUSIL NR™ (Tokuyama Soda Co., Ltd.) | 5.8 | 280 | 94 |
| FLORITE RN™ (Tokuyama Soda Co., Ltd.) | 8.1 | 380 | 61 |
| TIXOSIL 38™ (Kofran Chemical) | 6.5 | 280 | 90 |

Table 13

| Kind | $SiO_2$ Content (% by wt.) | Amount of Absorbed Oil (ml/100g) | pH of 5% Water Dispersion | Amount Dissolved in 2% aq. NaOH Soln. (g) |
|---|---|---|---|---|
| PERLITE™ (DICALITE, PERLITE4159 DICALITE ORIENT, Co., LTD.) | 72.7 | 165 | 7.8 | 0.01 |
| Na-Mordenite (HSZ-640NAA, Tosoh Corporation) | 87.5 | 110 | 10.7 | 0.12 |
| TOKUSIL NR™ (Tokuyama Soda Co., Ltd.) | 94 | 280 | 5.8 | 2.35 |

Table 13 (continued)

| Kind | $SiO_2$ Content (% by wt.) | Amount of Absorbed Oil (ml/100g) | pH of 5% Water Dispersion | Amount Dissolved in 2% aq. NaOH Soln. (g) |
|---|---|---|---|---|
| FLORITE RN™ (Tokuyama Soda Co., Ltd.) | 61 | 380 | 8.1 | 2.18 |

Here, the pH of the 5% water dispersion and the amount of oil absorbed are determined according to JIS K 6220. Also, the amount of the oil-absorbing carrier dissolved in a 2% aqueous NaOH solution is determined by dispersing 10 g of the oil-absorbing carrier in 100 ml of a 2% aqueous NaOH solution, stirring the dispersion for 16 hours while the temperature is kept at 25°C and determining $SiO_2$ in the filtrate by colorimetric determination [as for the colorimetric determination, refer to Yukagaku, Vol. 25, p. 156 (1976)]. Namely, the amount of the oil-absorbing carrier dissolved in the aqueous NaOH solution is calculated from the $SiO_2$ content of the oil-absorbing carrier which is determined by elementary analysis in advance.

Comparative Detergent Compositions 3-1 through 3-3

The detergent compositions having the compositions shown in Tables 14 and 15 are prepared in the same manner as in Detergent Compositions described above except that Zeolite 4A is used in place of the synthesized inorganic ion exchange material powder and that the oil-absorbing carrier is omitted.

Test Example 10

Detergent Compositions 3-1 through 3-23 and Comparative Detergent Compositions 3-1 through 3-3 are tested for solubility change upon storage as follows:

Each powdery detergent composition is placed in a Petri dish and left to stand at 30°C and 50% RH for 3 days, after which a 0.83 g sample is taken and added to 1 liter of tap water at 10°C, followed by stirring with a magnetic stirrer for 10 minutes. The mixture is then filtered through a 200-mesh metal gauze and dried, after which the filtration residue rate (%) is determined. The results are shown in Tables 14 and 15.

Test Example 11

Detergent Compositions 3-1 through 3-23 and Comparative Detergent Compositions 3-1 through 3-3 are used to carry out a deterging test for stains caused by fatty acids under the following conditions:

(Preparation of Artificially Stained Cloth)

Cotton test pieces of 10 cm x 10 cm stained with paraffins and fatty acids having the following compositions and trace amounts of carbon black are prepared.

| | |
|---|---|
| Oleic acid | 20% |
| Palmitic acid | 20% |
| Liquid and solid paraffins | 60% |

(Deterging Conditions)

Washing is carried out using a Turgotometer ("Model 400," manufactured by Ueshima Seisakusho) by washing at a rotational speed of 100 rpm, at a temperature of 35°C for 15 minutes in 8°DH (calcium hard water) water having a detergent concentration of 0.1% by weight, followed by rinsing with tap water for 5 minutes.

(Calculation of Deterging Rate)

The deterging rate D(%) is calculated in the same manner as in Test Example 1. The results thereof are shown in Tables 14 and 15.

Table 14

| Component | | Detergent Composition 3- | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| (a) | Dodecyl alcohol ethoxylate | 24 | 24 | 24 | 24 | 24 | 24 | 24 | 24 | – | 15 | 24 | 24 | 24 |
| | Synthetic primary alcohol ethoxylate | – | – | – | – | – | – | – | – | 20 | – | – | – | – |
| (b) | Ion Exchange Material A | 30 | 30 | 30 | 30 | 30 | 30 | 30 | 30 | 45 | 55 | – | – | – |
| | Ion Exchange Material E | – | – | – | – | – | – | – | – | – | – | 30 | – | – |
| | Ion Exchange Material F | – | – | – | – | – | – | – | – | – | – | – | 30 | – |
| | Ion Exchange Material G | – | – | – | – | – | – | – | – | – | – | – | – | 30 |
| (c) | TOKUSIL AL-1™ | 10 | – | – | – | – | – | – | – | 5 | – | – | – | – |
| | NIPSIL NA™ | – | 10.5 | – | – | – | – | – | – | – | – | – | – | – |
| | TIXOLEX 25™ | – | – | 10.5 | – | – | – | – | – | – | 10 | – | – | – |
| | CARPLEX #100™ | – | – | – | 11 | – | – | – | – | – | – | – | – | – |
| | SIPERNAT D 10 ™ | – | – | – | – | 10.5 | – | – | – | – | – | – | – | – |
| | TOKUSIL NR™ | – | – | – | – | – | 10 | – | – | – | – | – | – | – |
| | FLORITE RN™ | – | – | – | – | – | – | 7.5 | – | – | – | – | – | – |
| | TIXOSIL 38™ | – | – | – | – | – | – | – | 10.5 | – | – | – | – | – |
| Sodium carbonate | | Bal. | Bal. | Bal. | Bal. | Bal. | Bal. | Bal. | Bal. | Bal. | Bal. | Bal. | Bal. | Bal. |
| Water | | 5 | 5 | 5 | 5 | 5 | 5 | 5 | 5 | 5 | 5 | 5 | 5 | 5 |
| Solubility Change upon Storage (%) | | 0.4 | 0.4 | 0.3 | 0.3 | 0.3 | 0.8 | 0.9 | 0.9 | 0.3 | 0.4 | 0.5 | 0.5 | 0.5 |
| Deterging Rate of Fatty Acid Stains (%) | | 72.1 | 72.2 | 71.6 | 71.5 | 72.0 | 72.6 | 72.1 | 71.8 | 73.3 | 70.4 | 70.1 | 70.0 | 71.0 |

Table 15

| Component | | Detergent Composition 3- 14 | 15 | 16 | 17 | 18 | 19 | 20 | 21 | 22 | 23 | Comparative Detergent Composition 3-1 | 3-2 | 3-3 |
|---|---|---|---|---|---|---|---|---|---|---|---|---|---|---|
| (a) | Dodecyl alcohol ethoxylate | - | - | - | - | - | - | - | - | 20 | 20 | 10 | 20 | 20 |
| | Synthetic alcohol ethoxylate | 24 | 24 | 24 | 24 | 24 | 24 | 24 | 24 | - | - | - | - | - |
| (b) | Ion Exchange Material A | 30 | - | - | - | 30 | - | - | - | 50 | 50 | 55 | - | - |
| | Ion Exchange Material B | - | 30 | - | - | - | 30 | - | - | - | - | - | - | - |
| | Ion Exchange Material F | - | - | 30 | - | - | - | 30 | - | - | - | - | - | - |
| | Ion Exchange Material G | - | - | - | 30 | - | - | - | 30 | - | - | - | - | - |
| | Zeolite 4A | - | - | - | - | - | - | - | - | - | - | - | 30 | 30 |
| | Sodium silicate(JIS No.1) | - | - | - | - | - | - | - | - | - | - | - | 10 | 10 |
| (c) | PERLITE™ | 20 | 20 | 20 | 20 | - | - | - | - | 15 | - | - | 15 | - |
| | Na-Mordenite | - | - | - | - | 16 | 16 | 16 | 16 | - | 12 | - | - | 12 |
| | Sodium carbonate | Bal. | Bal. | Bal. | Bal. | Bal. | Bal. | Bal. | Bal. | Bal. | Bal. | Bal. | Bal. | Bal. |
| | Water | 3 | 3 | 3 | 3 | 3 | 3 | 3 | 3 | 3 | 3 | 3 | 3 | 3 |
| | Solubility Change upon Storage (%) | 0.2 | 0.2 | 0.3 | 0.2 | 0.2 | 0.2 | 0.2 | 0.2 | 0.3 | 0.3 | 0.3 | 1.6 | 1.7 |
| | Deterging Rate of Fatty Acid Stains (%) | 72.1 | 71.0 | 70.3 | 70.6 | 71.2 | 71.6 | 71.5 | 70.9 | 72.4 | 71.8 | 63.2 | 70.1 | 70.2 |

As is seen from the above results, the detergent compositions of the present invention (Detergent Compositions 3-1 through 3-23) are excellent in change in solubility with time and washing power for dirt caused by fatty acids.

On the other hand, when zeolite, etc., a conventional ion exchange material for detergents, is used, (Comparative Detergent Compositions 3-2 and 3-3), the change in solubility with time is poorer, though the washing rate is equivalent or slightly lower.

Detergent Compositions 4-1 through 4-18

The synthesized inorganic ion exchange materials A, E, F and G obtained in the above Examples are used to prepare the detergent compositions of the present invention having the compositions shown in Tables 16 and 17 by the method described below.

Specifically, for Detergent Compositions 4-1 through 4-10, the components, other than the synthesized inorganic ion exchange materials and the bleaching components, are prepared as a slurry of 60% solid content, and then spray dried to yield grains, and then granulated in the presence of a corresponding amount of inorganic ion exchange material powder in a mixer granulator, followed by mixing the bleaching agent components and the bleaching activator compoments thereinto to prepare each detergent powder. For Detergent Compositions 4-11 through 4-18, the starting material powder is placed in a tumbling mixer granulator and subjected to mixing granulation while gradually introducing a liquid nonionic surfactant, followed by mixing the bleaching agent components and the bleaching activator components thereinto to prepare each detergent powder.

Powdery detergent compositions of average grain size of 200 to 500 μm are thus obtained.

The following bleaching activators are used.

Bleaching Activator [1]

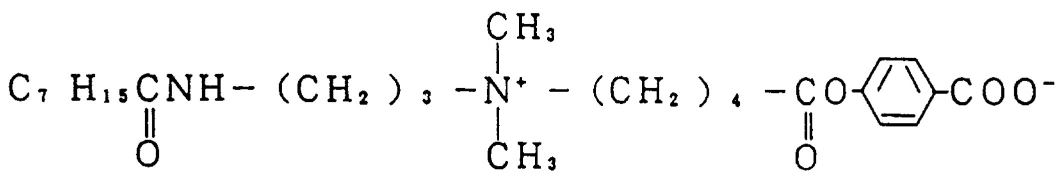

Bleaching Activator [2]

Sodium nonanoyloxybenzenesulfonate

Bleaching Activator [3]

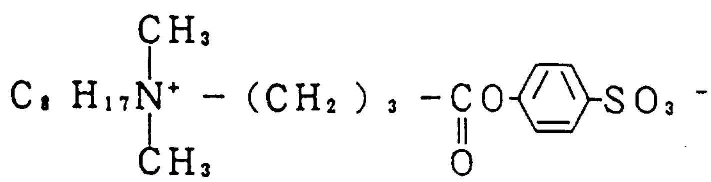

Bleaching Activator [4]

Tetraacetylethylenediamine (TAED)

Comparative Detergent Compositions 4-1 through 4-9

The comparative detergent compositions having the compositions shown in Tables 16 and 17 are prepared in the same manner as in Detergent Compositions except that the synthesized inorganic ion exchange material powder is omitted.

Test Example 12

Detergent Compositions 4-1 through 4-18 and Comparative Detergent Compositions 4-1 through 4-9 are used to carry out a deterging test under the following conditions:

(Preparation of cloth artificially stained with black tea)

To 1 liter of water, 10 tea bags (20 g) produced by Brooke Bond and 50 g of sugar are added, and the mixture is boiled for 10 minutes. The tea bags are then taken out, and the remaining solution is filled up to a total quantity of 1 liter. After cooling, the solution is placed in a vat, and a piece of desized cloth of 10 x 55 cm is immersed therein for 10 seconds for each of the top and back faces, passed through a roller, and kept standing to dryness in air to yield a sample of black-tea-stained cloth.

(Deterging Conditions)

Washing is carried out using a Turgotometer by washing by immersing in tap water having a detergent concentration of 0.42% at a temperature of 20°C with a liquor ratio of 1/12 for 1 hour, followed by washing in tap water having a detergent concentration of 0.083% at a temperature of 20°C and a liquor ratio of 1/60 for 1 hour and 10 minutes.

(Calculation of Bleaching Rate)

The bleaching rate is calculated by measuring reflectivities of the original cloth before the washing and those of the stained cloth before and after the washing in the same manner as in Test Example 1 to evaluate bleaching properties.

The results thereof are shown together in Tables 16 and 17.

Table 16

| Component | | Detergent Composition 4- 1 | 2 | 3 | 4 | 5 | 6 | 7 | 8 | Comparative Detergent Composition 4-1 | 4-2 | 4-3 | Detergent Composition 4- 9 | 10 | Comparative Detergent Composition 4-4 | 4-5 |
|---|---|---|---|---|---|---|---|---|---|---|---|---|---|---|---|---|
| (a) | LAS-Na(C12-14) | 25 | 25 | 25 | 25 | 16 | 27 | 25 | 25 | 25 | 25 | 25 | 25 | 25 | 25 | 25 |
| | AS-Na (C12-18) | 7 | 7 | 7 | 7 | — | — | 7 | 7 | 7 | 7 | 7 | 7 | 7 | 7 | 7 |
| | AOS-K (C14-18) | — | — | — | — | 16 | — | — | — | — | — | — | — | — | — | — |
| | SFE-Na(C14-18) | — | — | — | — | — | 5 | — | — | — | — | — | — | — | — | — |
| | Tallow Soap(C12-20) | 2 | 2 | 2 | 2 | 2 | 2 | 2 | 2 | 2 | 2 | 2 | 2 | 2 | 2 | 2 |
| (b) | Ion Exchange Material A | 25 | — | — | — | 25 | 25 | 15 | 15 | — | — | — | 25 | 25 | — | — |
| | Ion Exchange Material E | — | 25 | — | — | — | — | — | — | — | — | — | — | — | — | — |
| | Ion Exchange Material F | — | — | 25 | — | — | — | — | — | — | — | — | — | — | — | — |
| | Ion Exchange Material G | — | — | — | 25 | — | — | — | — | — | — | — | — | — | — | — |
| (c) | Sodium perborate hydrate | — | — | — | — | — | 10 | — | — | — | — | — | — | — | — | — |
| | Sodium percarbonate | 10 | 10 | 10 | 10 | 10 | — | 10 | 10 | 10 | 10 | 10 | 6 | 6 | 6 | 6 |
| Zeolite 4A | | — | — | — | — | — | — | 10 | — | 25 | — | — | — | — | 25 | — |
| Trisodium citrate dihydrate | | — | — | — | — | — | — | — | 10 | — | 25 | — | — | — | — | 25 |
| Sodium carbonate | | Bal. | Bal. | Bal. | Bal. | Bal. | Bal. | Bal. | Bal. | Bal. | Bal. | Bal. | Bal. | Bal. | Bal. | Bal. |
| Sodium silicate(JIS No.2) | | 5 | 5 | 5 | 5 | 5 | 5 | 5 | 5 | 5 | 5 | 5 | 5 | 5 | 5 | 5 |
| 1-hydroxyethylidene 1,1-diphosphonic acid sodium salt | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Bleaching Activator [1] | | — | — | — | — | — | — | — | — | — | — | — | 3 | — | 3 | — |
| Bleaching Activator [2] | | — | — | — | — | — | — | — | — | — | — | — | — | 3 | — | 3 |
| Water | | 5 | 5 | 5 | 5 | 5 | 5 | 5 | 5 | 5 | 5 | 5 | 5 | 5 | 5 | 5 |
| Bleaching Rate (%) | | 10.9 | 10.9 | 10.3 | 10.8 | 9.1 | 8.9 | 10.0 | 9.9 | 6.8 | 7.0 | 6.0 | 34.3 | 18.8 | 29.8 | 14.9 |

Table 17

| Component | | Detergent Composition 4- 11 | 12 | 13 | 14 | 15 | 16 | Comparative Detergent Composition 4-6 | 4-7 | Detergent Composition 4- 17 | 18 | Comparative Detergent Composition 4-8 | 4-9 |
|---|---|---|---|---|---|---|---|---|---|---|---|---|---|
| (a) | Polyoxyethylene synthetic alcohol C12-14 ether EOp=7 | 24 | 24 | 24 | 24 | – | 24 | 24 | 24 | 24 | 24 | 24 | 24 |
| | Polyoxyethylene dodecyl ether EOp=8 | – | – | – | – | 20 | – | – | – | – | – | – | – |
| (b) | Ion Exchange Material A | 32 | – | – | – | 30 | 20 | – | – | 32 | 32 | – | – |
| | Ion Exchange Material B | – | 32 | – | – | – | – | – | – | – | – | – | – |
| | Ion Exchange Material F | – | – | 32 | – | – | – | – | – | – | – | – | – |
| | Ion Exchange Material G | – | – | – | 32 | – | – | – | – | – | – | – | – |
| (c) | Sodium percarbonate | 8 | 8 | 8 | 8 | – | 8 | 8 | 8 | 6 | 6 | 6 | 6 |
| | Sodium perborate tetrahydrate | – | – | – | – | 8 | – | – | – | – | – | – | – |
| Zeolite 4A | | – | – | – | – | – | 12 | 32 | – | – | – | 32 | 32 |
| Sodium carbonate | | Bal. | Bal. | Bal. | Bal. | Bal. | Bal. | Bal. | Bal. | ← | ← | ← | ← |
| amorphous silica | | 5 | 5 | 5 | 5 | 4 | 5 | 5 | 5 | 5 | 5 | 5 | 5 |
| Sodium α-hydroxyacrylate (MW=30000) | | 0.8 | 0.8 | 0.8 | 0.8 | 0.8 | 0.8 | 0.8 | 0.8 | 0.8 | 0.8 | 0.8 | 0.8 |
| Bleaching Activator [3] | | – | – | – | – | – | – | – | – | 2.5 | – | 2.5 | – |
| Bleaching Activator [4] | | – | – | – | – | – | – | – | – | – | 2.5 | – | 2.5 |
| Water | | 3 | 3 | 3 | 3 | 3 | 3 | 3 | 3 | 3 | 3 | 3 | 3 |
| Bleaching Rate (%) | | 11.2 | 10.9 | 10.7 | 11.2 | 10.1 | 10.6 | 7.7 | 7.2 | 39.9 | 17.8 | 31.8 | 15.1 |

As is clear from these results in Tables 16 and 17, the detergent compositions of the present invention (Detergent Compositions 4-1 through 4-18) offer higher bleaching rates than in the case where zeolite, a conventional ion exchange material for detergents, is used (Comparative Detergent Compositions 4-1, 4-4, 4-6, 4-8 and 4-9). Also, in comparison with the case where trisodium citrate • dihydrate is used (Comparative Detergent Compositions 4-2 and 4-5) and the case where no synthesized ion exchange material is used (Comparative Detergent Compositions 4-3 and 4-7), higher bleaching rates are obtained in the present invention.

Detergent Composition 5-1 through 5-127

Detergent Compositions 5-1 through 5-127 are prepared in the same manner as in each of Detergent Compositions 1-1 through 4-18 described above except that a part of sodium sulfate or sodium carbonate is replaced with arbitrarily chosen components shown below, and the similar tests are carried out. When compared to the case where the arbitrarily chosen components are not contained, the deterging ability of equivalent to or higher than those of Detergent Compositions 1-1 through 4-18 can be achieved.
In Detergent Compositions 5-1 through 5-127, an excellent enzyme stability during storage can be achieved.

| [Arbitrarily Chosen Component] | | |
|---|---|---|
| Enzyme | Protease ("Savinase™," manufactured by NOVO Nordisk Bioindustry, Ltd.) | 0.3% by weight |
| | Cellulase ("Alkaline cellulase K" disclosed in EP 265832) | 0.8% by weight |
| | Amylase ("Termamyl™," manufactured by NOVO Nordisk Bioindustry, Ltd.) | 0.05% by weight |
| | Lipase ("Lipolase™," manufactured by NOVO Nordisk Bioindustry, Ltd.) | 0.05% by weight |
| Florescent dye | (DM-type, manufactured by Sumitomo Chemical Co., Ltd.) | 0.5% by weight |
| Tallow soap | (of carbon number 12 to 18) | 1.0% by weight |
| Perfume | | 0.5% by weight |
| Total | | 3.2% by weight |

The present invention being thus described, it will be obvious that the same may be varied in many ways. Such variations are not to be regarded as a departure from the scope of the invention, and are intended to be included within the scope of the following claims.

## Claims

1. A synthesized crystalline ion exchange material having a chain structure and comprising a composition represented by the following formula in anhydride form:

$$xM_2O \cdot ySiO_2 \cdot zM'O,$$

wherein M represents Na and/or K; M' represents Ca and/or Mg; y/x is 0.5 to 2.0; and z/x is 0.005 to 1.0, said chain structure appearing as a main scattering peak in Raman spectra at least at $970 \pm 20$ $cm^{-1}$ in the range of 900 to 1200 $cm^{-1}$, and wherein the ratio of a peak height at $970 \pm 20$ $cm^{-1}$ to a peak height at $1070 \pm 30$ $cm^{-1}$ is 0.1 to 100, or wherein said main scattering peak in Raman spectra is present at $970 \pm 20$ $cm^{-1}$ alone.

2. The synthesized crystalline ion exchange material according to claim 1, having a cationic exchange capacity of 200 to 600 $mgCaCO_3/g$.

3. The synthesized crystalline ion exchange material according to claim 1, wherein the amount of Si dissolved in water is not more than 120 mg/g, when calculated as $SiO_2$.

4. A hydrate of the synthesized crystalline ion exchange material of claims 1 to 3.

5. A detergent composition containing the synthesized crystalline ion exchange material of claim 1 and/or a hydrate thereof, and a surfactant.

6. The detergent composition according to claim 5, wherein said surfactant is nonionic.

7. The detergent composition according to claim 6, comprising:

   (a) 12 to 50% by weight of the nonionic surfactant;

(b) 0.5 to 70% by weight of the synthesized crystalline ion exchange material and/or the hydrate thereof; and

(c) 5 to 30% by weight of a porous oil-absorbing carrier having an oil-absorbing capacity of not less than 80 ml/100 g.

**8.** The detergent composition according to claim 5, further containing a polymer or a copolymer having a repeating unit represented by the following formula:

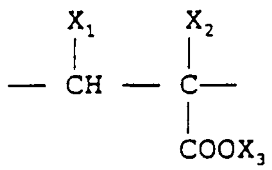

wherein $X_1$ represents methyl group, hydrogen atom or $COOX_3$ group; $X_2$ represents methyl group, hydrogen atom or hydroxyl group; and $X_3$ represents hydrogen atom, an alkali metal element, an alkaline earth metal element, $NH_4$ group or ethanolamine group.

**9.** The detergent composition according to claim 5, further containing 0.5 to 40% by weight of an oxygen-based bleaching agent.

**10.** The detergent composition according to claim 9, wherein said oxygen-based bleaching agent is at least one member selected from the group consisting of sodium percarbonate, sodium perborate monohydrate and sodium perborate tetrahydrate.

**11.** The detergent composition according to claim 9 or 10, further containing a bleaching activator which is at least one member selected from the group consisting of:

(A) An organic peracid precursor which produces an organic peracid having an $N^+$ group upon reaction with hydrogen peroxide;
(B) An organic peracid precursor which produces an organic peracid upon reaction with hydrogen peroxide wherein the leaving group is phenolsulfonic acid or a salt thereof; and
(C) An organic peracid precursor which produces a peracetic acid upon reaction with hydrogen peroxide.

**12.** The detergent composition according to claim 5, further containing an enzyme.

**13.** The detergent composition according to claim 5, wherein the surfactant is present in an amount of 1 to 60% by weight, based on the whole composition.

**Patentansprüche**

**1.** Synthetisierter kristalliner Ionenaustauscher mit einer Kettenstruktur, umfassend eine durch folgende Formel in Form des Anhydrids wiedergegebene Zusammensetzung:

$$xM_2O \cdot ySiO_2 \cdot zM'O,$$

in der M Na und/oder K darstellt, M' Ca und/oder Mg darstellt, y/x 0.5 bis 2.0 ist, und z/x 0.005 bis 1.0 ist, wobei die Kettenstruktur als Hauptstreuungspeak in Ramanspektren im Bereich von 900 bis 1200 $cm^{-1}$ mindestens bei 970 $\pm$ 20 $cm^{-1}$ auftritt, und in dem das Verhältnis der Peakhöhe bei 970 $\pm$ 20 $cm^{-1}$ zur Peakhöhe bei 1070 $\pm$ 30 $cm^{-1}$ 0.1 zu 100 beträgt, oder in dem der Hauptstreuungspeak in Ramanspektren nur bei 970 $\pm$ 20 $cm^{-1}$ vorhanden ist.

**2.** Synthetisierter kristalliner Ionenaustauscher nach Anspruch 1 mit einer kationischen Austauschkapazität von 200 bis 600 mg $CaCO_3$/g.

**3.** Synthetisierter kristalliner Ionenaustauscher nach Anspruch 1, wobei die Menge an in Wasser gelöstem Si nicht mehr als 120 mg/g, berechnet als $SiO_2$, beträgt.

4. Hydrat des synthetisierten kristallinen Ionenaustauschers nach den Ansprüchen 1 bis 3.

5. Detergenszusammensetzung, die den synthetisierten kristallinen Ionenaustauscher nach Anspruch 1 und/oder ein Hydrat davon und ein grenzflächenaktives Mittel enthält.

6. Detergenszusammensetzung nach Anspruch 5, in der das grenzflächenaktive Mittel nichtionisch ist.

7. Detergenszusammensetzung nach Anspruch 6, umfassend:

(a) 12 bis 50 Gew.-% des nichtionischen grenzflächenaktiven Mittels,
(b) 0.5 bis 70 Gew.-% des synthetisierten kristallinen Ionenaustauschers und/oder des Hydrats davon, und
(c) 5 bis 30 Gew.-% eines porösen, ölabsorbierenden Trägers mit einer ölabsorbierenden Kapaziät von nicht weniger als 80 ml/100 g.

8. Detergenszusammensetzung nach Anspruch 5, die ferner ein Polymer oder ein Copolymer mit einer durch folgende Formel wiedergegebenen wiederholenden Einheit enthält:

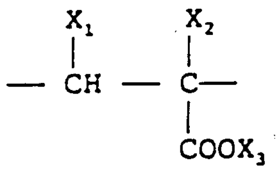

in der $X_1$ eine Methylgruppe, ein Wasserstoffatom oder einen Rest $COOX_3$ darstellt, $X_2$ eine Methylgruppe, ein Wasserstoffatom oder eine Hydroxylgruppe darstellt und $X_3$ ein Wasserstoffatom, ein Alkalimetallelement, ein Erdalkalimetallelement, eine $NH_4$-Gruppe oder Ethanolamingruppe darstellt.

9. Detergenszusammensetzung nach Anspruch 5, die ferner 0.5 bis 40 Gew.-% eines Bleichmittels auf Sauerstoffbasis enthält.

10. Detergenszusammensetzung nach Anspruch 9, in der das Bleichmittel auf Sauerstoffbasis mindestens ein Vertreter, ausgewählt aus Natriumpercarbonat, Natriumperborat-Monohydrat und Natriumperborat-Tetrahydrat, ist.

11. Detergenszusammensetzung nach Anspruch 9 oder 10, die ferner einen Bleichaktivator enthält, der mindestens ein aus der Gruppe:

(A) eine organische Persäurevorstufe, die durch Reaktion mit Wasserstoffperoxid eine organische Persäure mit einer $N^+$-Gruppe ergibt;
(B) eine organische Persäurevorstufe, die durch Reaktion mit Wasserstoffperoxid eine organische Persäure ergibt, wobei die Austrittsgruppe eine Persulfonsäure oder ein Salz davon ist, und
(C) eine organische Persäurevorstufe, die durch Reaktion mit Wasserstoffperoxid Peressigsäure ergibt, ausgewählter Vertreter ist.

12. Detergenszusammensetzung nach Anspruch 5, die ferner ein Enzym enthält.

13. Detergenszusammensetzung nach Anspruch 5, in der das grenzflächenaktive Mittel in einer Menge von 1 bis 60 Gew.-%, bezogen auf die gesamte Zusammensetzung, vorhanden ist.

## Revendications

1. Matériau cristallin d'échange d'ions de synthèse ayant une structure en chaîne et une composition représentée par la formule suivante sous forme d'anhydride :

$$xM_2O \cdot ySiO_2 \cdot zM'O$$

dans laquelle M représente Na et/ou K ; M' représente Ca et/ou Mg ; y/x est de 0,5 à 2,0 ; et z/x est de 0,005 à 1,0,

ladite structure en chaîne apparaissant comme une crête principale de diffusion dans des spectres Raman au moins à 970 ± 20 $cm^{-1}$ dans la plage allant de 900 à 1200 $cm^{-1}$, et le rapport entre une hauteur de crête à 970 ± 20 $cm^{-1}$ et une hauteur de crête de 1070 ± 30 $cm^{-1}$ est de 0,1 à 100, ou ladite crête principale de diffusion étant présente dans des spectres Raman à 970 ± 20 $cm^{-1}$ uniquement.

**2.** Matériau cristallin d'échange d'ions de synthèse selon la revendication 1, ayant une capacité d'échange cationique de 200 à 600 mg de $CaCO_3$/g.

**3.** Matériau cristallin d'échange d'ions de synthèse selon la revendication 1, dans lequel la teneur en Si dissoute dans l'eau ne dépasse 120 mg/g lorsqu'elle est calculée sous forme de $SiO_2$.

**4.** Hydrate du matériau cristallin d'échange d'ions de synthèse selon les revendications 1 à 3.

**5.** Composition détergente contenant le matériau cristallin d'échange d'ions de synthèse selon la revendication 1 et/ou un hydrate de celui-ci, ainsi qu'un agent de surface.

**6.** Composition détergente selon la revendication 5, dans laquelle ledit agent de surface est non-ionique.

**7.** Composition détergente selon la revendication 6, constituée de :

(a) entre 12 et 50 % en poids de l'agent de surface non-ionique ;

(b) entre 0,5 et 70 % en poids du matériau cristallin d'échange d'ions de synthèse et/ou de l'hydrate de celui-ci ; et

(c) entre 5 et 30 % en poids d'un porteur oléophile poreux dont la capacité d'absorption d'huile est égale ou supérieure à 80 ml/ 100 g.

**8.** Composition détergente selon la revendication 5, contenant en outre un polymère ou un copolymère ayant un motif récurrent représenté par la formule suivante :

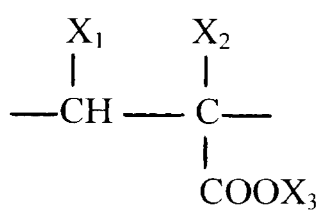

où $X_1$ représente un groupe méthyle, un atome d'hydrogène ou un groupe $COOX_3$ ; $X_2$ représente un groupe méthyle, un atome d'hydrogène ou un groupe hydroxyle ; et $X_3$ représente un atome d'hydrogène, un élément métallique alcalin, un élément métallique alcalino-terreux, un groupe $NH_4$ ou un groupe éthanolamine.

**9.** Composition détergente selon la revendication 5, contenant en outre entre 0,5 et 40 % en poids d'un agent de blanchiment à base d'oxygène.

**10.** Composition détergente selon la revendication 9, dans laquelle ledit agent de blanchiment à base d'oxygène est au moins l'un des membres du groupe composé de percarbonate de sodium, monohydrate de perborate de sodium et tétrahydrate de perborate de sodium.

**11.** Composition détergente selon la revendication 9 ou la revendication 10, contenant en outre un activateur de blanchiment constitué d'au moins l'un des membres du groupe composé de :

(A) un précurseur de peracide organique produisant un peracide organique ayant un groupe $N^+$ lorsqu'il est mis en réaction avec de l'eau oxygénée ;

(B) un précurseur de peracide organique produisant un peracide organique lorsqu'il est mis en réaction avec

de l'eau oxygénée dans lequel le groupe de sortie est de l'acide phénolsulfonique ou un sel de celui-ci ; et

(C) un précurseur de peracide organique produisant un acide peracétique lorsqu'il est mis en réaction avec de l'eau oxygénée.

**12.** Composition détergente selon la revendication 5, contenant en outre une enzyme.

**13.** Composition détergente selon la revendication 5, dans laquelle l'agent de surface est présent dans une proportion de 1 à 60 % en poids par rapport à l'ensemble de la composition.

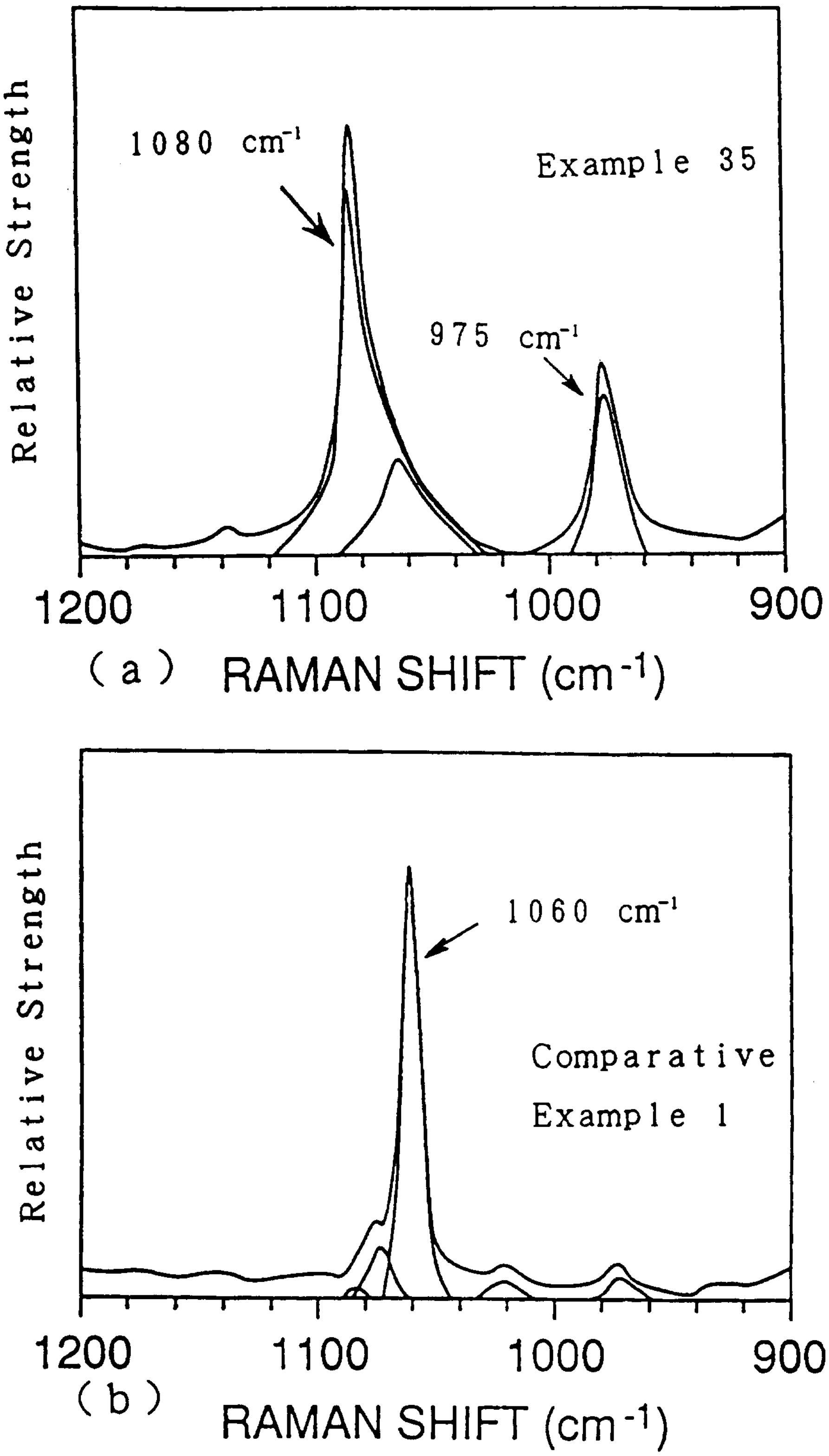
Relative Strength
1080 cm⁻¹
Example 35
975 cm⁻¹
1200
1100
1000
900
( a )
RAMAN SHIFT (cm⁻¹)
Relative Strength
1060 cm⁻¹
Comparative
Example 1
1200
1100
1000
900
( b )
RAMAN SHIFT (cm⁻¹)

FIG. 1